# EUROPEAN PATENT APPLICATION

(11) **EP 1 947 716 A1**
(43) Date of publication of application: **23.07.2008**
(21) Application number: 06810582.4
(22) Date of filing: 26.09.2006
(51) Int. Cl.: H01M 4/86, H01M 8/16, C12N 1/00

(54) **ANODE FOR BIOLOGICAL POWER GENERATION AND POWER GENERATION METHOD AND DEVICE UTILIZING IT**

(30) Priority: 28.09.2005 JP 2005282777
(71) Applicant: EBARA CORPORATION, Ohta-ku, Tokyo (JP)
(72) Inventor: SHIMOMURA, Tatsuo, Fujisawa-shi Kanagawa2518502 (JP); ADACHI, Masanori, Fujisawa-shi Kanagawa 2518502 (JP); KOMATSU, Makoto, Fujisawa-shi Kanagawa 2518502 (JP); MIYA, Akiko, Fujisawa-shi Kanagawa 2518502 (JP)
(74) Representative: Wagner & Geyer
(86) International application number: PCT/JP2006/319057
(87) International publication number: WO 2007/037228

(57) **Abstract**

A method and a device for obtaining electric energy efficiently from a hydrous organic substance by suppressing the activation overvoltage of an anode low and thereby obtaining a sufficiently low anode potential. The power generating device comprises an anaerobic region (4) including microorganisms which can grow under anaerobic conditions, solution or suspension containing an organic substance, an electron mediator and an anode (1), an aerobic region (5) including molecular oxygen and a cathode (3), and a diaphragm (2) defining the anaerobic region (4) and the aerobic region (5), wherein a closed circuit (6) is formed by connecting the anode (1) and the cathode (3) electrically with a power utilization apparatus, and oxidation reaction of microorganisms using the organic substance in the anaerobic region (4) as electron donor and a reduction reaction using oxygen in the aerobic region (5) as electron acceptor are utilized. The anode (1) includes a conductive substrate having a surface coated at least partly with a hydrophilic polymer layer, an electron mediator is introduced into the hydrophilic polymer layer with chemical bond, and the anode (1) has a standard electrode potential (E₀') at pH 7 in a range of -0.13 V to -0.28 V.

## Description

### TECHNICAL FIELD

This invention relates to a biological power generation technology which uses, as a substrate, an organic substance such as wastewater, liquid waste, night soil, food waste, other organic wastes, or sludge or a decomposition product thereof, and separates an oxidation-reduction reaction between the substrate and oxygen in air into an oxidation reaction by anaerobic organisms and a reduction reaction of oxygen, thereby performing power generation.

### BACKGROUND ART

As methods for obtaining usable energy by decomposing wastewater, liquid waste, night soil, food waste, other organic waste, or sludge (hereinafter referred to as "a wet-type organic substance"), there have been worked out a method which produces methane or the like by anaerobic fermentation including methanogenesis, and carries out power generation by using methane or the like; and a biological fuel cell method which directly obtains electricity from the anaerobic respiratory reaction of organisms.

However, the method which produces methane, ethanol, hydrogen, etc. by anaerobic fermentation including methanogenesis and generates electricity by using them, requires two steps, i.e., a substance production step by organisms, and a power generation step by using the product as a fuel. Thus, this method has the problems of low energy efficiency and a complex apparatus.

On the other hand, there were reports about methods utilizing microorganisms in which electrons from electron donors around an anode are supplied to electron acceptors (mainly, dissolved oxygen) around the cathode by making a circuit with the anode and the cathode, thereby obtaining an electric current (Patent documents 1, 2 and 3 to be indicated later). As for these methods, the cathode is installed in water, so that the diffusion rate of dissolved oxygen in water has a high possibility of becoming a rate limiting step of the entire reaction. That is, the reduction reaction of dissolved oxygen in water depends on the diffusion rate of oxygen in water. Thus, the current value per unit surface area of the electrode without stirring is at most 20 µA/cm², regardless of its overvoltage. This amount is markedly smaller than a value obtained with the use of oxygen in air (i.e., about 300 mA/cm² at an overvoltage of 200 mV). Hence, the diffusion rate of dissolved oxygen is found to be a limiting factor for oxidation of the wet-type organic substance and power generation.

As another example, there has been proposed a method in which an inadequate amount of organic matter is always given to microorganisms to keep the microorganisms in a starvation state, thereby withdrawing electrons at high efficiency (Patent document 4). This document describes that an oxygen electrode or air electrode can be used as a cathode. However, the document is lacking in descriptions and embodiments showing the concrete structure of an apparatus using the air electrode. Thus, the document fails to disclose a means for solving the problems to such an extent that one of ordinary skill in the art could put it into practice.

As biological fuel cell technologies utilizing electron mediators, there have been proposed methods which use a wet-type organic substance or its decomposition product as a substrate, and separate an oxidation-reduction reaction between the substrate and oxygen into an oxidation reaction by anaerobic microorganisms and a reduction reaction of oxygen, thereby performing power generation (Patent document 3 and Non-patent documents 1 to 3). However, the standard electrode potentials of the electron mediators used in these methods do not overlap the standard electrode potentials of final electron acceptor for anaerobic microorganisms generally used in biological fuel cell reactions, and there is a problem of being unable to form an effective cascade of potential. For example, standard electrode potentials of the proposed electron mediators are as shown in Table 1 below.

[Table 1]

**Table 1 Standard electrode potentials of various electron mediators**

| | Electron mediator | Standard electrode potential E₀' (V) |
|---|---|---|
| A | Thionine | +0.064 |
| B | Brilliant Cresyl Blue | +0.047 |
| C | NAD⁺ | -0.32 |
| D | Neutral Red | -0.325 |
| E | Benzylviologen | -0.36 |
| F | Methylviologen | -0.36 |
| G | Ethylviologen | -0.45 |

On the other hand, the standard electrode potentials of sulfur and iron, which are final electron acceptor for sulfur-reducing bacteria and iron oxide(III)-reducing bacteria as anaerobic microorganisms used in general biological cell reactions, are as shown in Table 2 below.

[Table 2]

**Table 2 Standard electrode potentials of final electron acceptor for anaerobic microorganisms**

| Final electron accepting reaction | Standard electrode potential E₀' (V) |
|---|---|
| O₂/H₂O | +0.82 |
| Fe(III)/Fe(II) | +0.20 |
| S(O)/H₂S | -0.28 |

Table 2 shows that the terminal reductase of the electron transport system possessed by the sulfur-reducing bacteria (i.e., sulfur reductase) can reduce the substance having a standard electrode potential of -0.28 V, whereas the terminal reductase of the electron transport system possessed by the iron oxide(III)-reducing bacteria (i.e., iron oxide(III) reductase) can reduce the substance having a standard electrode potential of +0.20 V. These terminal reductases can become effective catalysts for efficient biological power generation, because they are present in the outer membrane or periplasm of the microorganisms, and can reduce extracellular iron oxide or zero-valent sulfur. However, the standard electrode potentials of the electron mediators so far proposed, e.g., the electron mediators A to G as shown in Table 1, are all lower than the standard electrode potential for iron reduction. Thus, an effective cascade of potential cannot be formed among the iron oxide(III) reductase, the electron mediator and the anode. Similarly, the electron mediators C to G in Table 1 have lower standard electrode potentials than that for sulfur reduction. Thus, an effective cascade of potential cannot be formed among the sulfur reductase, the electron mediator and the anode. The electron mediators A and B in Table 1 have higher standard electrode potentials than that for sulfur reduction. Therefore, reduction by the sulfur reductase is theoretically possible. However, the potential difference is greater than 0.3 V, so that biological electron transfer is likely to be very difficult. In addition, to increase power generation efficiency, it is required to cause the largest possible potential difference for the oxygen reduction reaction at the cathode, but due to the high potentials of these electron mediators, potential differences of more than 0.3 V are lost, resulting in great energy losses.

Accordingly, it was proposed to attempt to increase the electron transfer efficiency by adding anthraquinone-2,6-disulfonic acid (AQ-2,6-DS) to an anaerobic region of a biological fuel cell using sulfur-reducing bacteria (Non-patent document 2). The standard electrode potential of AQ-2,6-DS is -0.185 V, and is considered to be a suitable substance for forming an effective cascade of potential between the sulfur reductase and the electron mediator. In the proposed system, however, AQ-2,6-DS is merely added to the liquid phase, and is not immobilized on to the anode (oxidation electrode). Thus, its reactivity with the electrode is so low that an electric current increase resulting from the addition is only 24%. Further in the case of continuously generating power, there is a problem such that the electron mediator is discharged together with the substrate liquor out of the system when the substrate solution in the anode compartment is renewed, and the addition of the electron mediator has to be continued at all times.

An attempt to immobilize Neutral Red on an anode by using amide bond has been proposed (Non-patent document 3). According to this proposal, a graphite electrode is oxidized to introduce a carboxyl group, and the graphite is reacted with Neutral Red in the presence of dicyclohexylcarbodiimide to form amide bond. During this process, in the following structural formula:

### [Chemical formula 1]

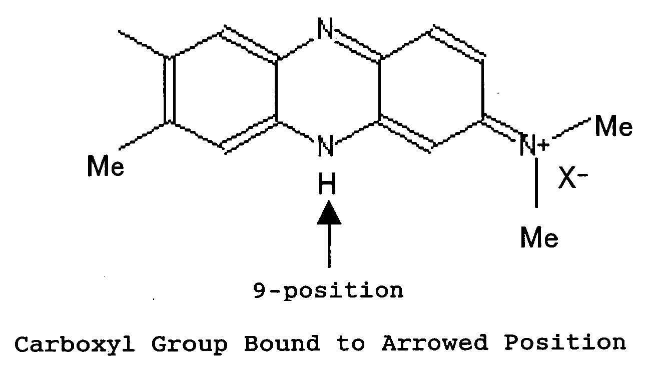

the carboxyl group is considered to be bound to a secondary amine of the 9-position indicated by an arrow. However, the peak electric current in the cyclic voltammetry of Neutral Red bound to graphite is observed near -0.42 V, which is about 0.1 V lower than the standard electrode potential of -0.325 V in its free state. This change further makes the utilization of the electron mediatorby organisms difficult. This may be because the standard electrode potential of Neutral Red has been markedly changed by chemical modification of the secondary amine at the 9-position.

On the other hand, a proposal has been made for a method obtaining negative electrode materials for a secondary battery in which a hydrophilic polymer such as polyethyleneimine and haloquinone are reacted to introduce quinone into the constituent units of the polymer (Patent document 5). With this method, the above quinone-fixed polymer is dripped onto a collector such as a platinum plate, followed by drying by heating, to prepare a chargeable and dischargeable negative electrode material. When the electrode prepared by the method disclosed in this patent is applied as the anode of a microbial fuel cell, however, the terminal reductase of microorganisms is able to reduce only the quinone near the surface of the polymer layer. In the case that the polymer layer shows hydrophobicity, a reduction reaction itself is difficult. Furthermore, even when the quinone on the surface of the polymer layer is reduced, the polymer layer which is a nonconductive substance, exists between the surface of the polymer layer and the platinum plate, so that electrons need to be moved to the collector. This causes the problem that the oxidation efficiency of the reduced form quinone is poor, and the overvoltage of activation also becomes high. Besides, in order to use the aforementioned anode for the microbial fuel cell, the hydrophilicity of the polymer layer needs to be maintained even after immobilization of the quinone. However, none of the methods and conditions for this requirement is disclosed.

In the biological power generation technologies using electron mediators, as described above, there is a demand for a technology which forms an effective potential cascade among the terminal reductase of microorganisms, the electron mediator and the anode, utilizes an electroconductive base material having a low activation overvoltage, and is able to maintain the hydrophilicity of the immobilized layer even after immobilization of the electron mediator.
Patent document 1: JP-A-2000-133327
Patent document 2: JP-A-2000-133326
Patent document 3: JP-T-2002-520032
Patent document 4: US Patent 4652501
Patent document 5: JP-A-6-56989
Patent document 6: JP-A-2005-317520
Non-patent document 1: Roller et al., 1984, Journal of Chemical Technology and Biotechnology 34B:3-12
Non-patent document 2: Bond et al., 2002, SCIENCE 295:483-485
Non-patent document 3: Park et al., 2000, Biotechnology Letters 22:1301-1304

### DISCLOSURE OF THE INVENTION

### PROBLEMS TO BE SOLVED BY THE INVENTION

The objective of the present invention is to solve the problems of the above-described conventional technologies, and provide an anode for biological power generation, which can efficiently perform biological power generation by a simple apparatus and a simple method. More concretely, the objective of the present invention is to provide an anode for biological power generation which enables an effective potential cascade to be formed among a final reductase of an anaerobic organism, an electron mediator, and an anode, eventually obtains a sufficiently low anode potential, and can obtain electric power from a wet-type organic substance efficiently; a method for producing the anode for biological power generation; and a power generation method and apparatus utilizing the anode for biological power generation.

### MEANS FOR SOLVING THE PROBLEMS

As described above, to form an effective potential cascade among a terminal reductase of a microorganism, an electron mediator, and an anode, it is desirable that the potential of the electron mediator be not lower than -0.28 V, which is the standard electrode potential for sulfur reduction. If it is intended to perform practical power generation, on the other hand, the potential of the anode may need to take as low a value as possible so that its potential difference from the potential of a cathode becomes as great as possible.

In the light of these findings, the inventors have proposed to select an electron mediator, with the standard electrode potential of a final electron accepting substance for an anaerobic microorganism being an indicator, to fix the electron mediator on the surface of an anode, and if necessary, to modify it with an amino group or a sulfonate group, thereby setting the standard electrode potential of the anode at pH 7 to become a potential within the range of -0.13 V to -0.28 V and as close to -0.28 V as possible (Patent document 6). This invention proposes a method in which graphite, porous graphite, gold, platinum, or a metal oxide (TiO₂ or the like) is used as an anode base material, and the electron mediator is immobilized to the anode base material by amide bond, gold- or platinum-sulfur bond, or silane coupling.

Further study conducted based on this conventionally obtained finding led us to the finding that the aforementioned objective could be attained even more effectively than by conventional inventions, by placing a hydrophilic polymer layer between the electron mediator and the electroconductive base material.

The present invention has been accomplished based on the above findings. According to the present invention, there is provided an anode for biological power generation which comprises an electroconductive base material having a surface at least partly coated with a hydrophilic polymer layer, in which an electron mediator is chemically bound to, and introduced into, the hydrophilic polymer layer, and which has a standard electrode potential (E₀') at pH 7 in a range of -0.13 V to -0.28 V.

According to the present invention, also provided is a power generation apparatus comprising an anaerobic region including microorganisms capable of growing in an anaerobic atmosphere, a solution or suspension containing an organic substance, and the anode for biological power generation of the present invention, an aerobic region including molecular oxygen and a cathode, and a diaphragm defining the anaerobic region and the aerobic region; wherein the anode and the cathode are electrically connected to an instrument utilizing electric power to form a closed circuit, and electric power is generated by utilizing an oxidation reaction using the organic substance as an electron donor within the anaerobic region, and a reduction reaction using oxygen as an electron acceptor within the aerobic region.

According to the present invention, there is also provided a power generation method comprising: providing an anaerobic region including microorganisms capable of growing in an anaerobic atmosphere, a solution or suspension containing an organic substance, and the anode for biological power generation of the present invention, an aerobic region including molecular oxygen and a cathode, and a diaphragm defining the anaerobic region and the aerobic region; electrically connecting the anode and the cathode to an instrument utilizing electric power to form a closed circuit; and utilizing an oxidation reaction using the organic substance as an electron donor within the anaerobic region, and a reduction reaction using oxygen as an electron acceptor within the aerobic region, to generate electric power.

The present invention will be described in further detail below.

The anode for biological power generation of the present invention is characterized by including an electroconductive base material having a surface at least partly coated with a hydrophilic polymer layer, and is characterized in that an electron mediator is introduced into the hydrophilic polymer layer with chemical bond, and the standard electrode potential (E₀') at pH 7 of the anode for biological power generation is in the range of -0.13 V to -0.28 V, preferably in the range of -0.15 V to -0.27 V.

The electroconductive base material usable in the present invention is preferably an electrode base material used in a biological power generation apparatus, the electrode base material having high adhesion to and high trapping properties for a hydrophilic polymer. Preferred examples of the base material are consolidation products of powdery materials such as graphite, carbon black, fullerene, carbon nanotube (CNT), and vapor-grown carbon fiber (VGCF); metals such as aluminum, nickel, iron, copper, gold and platinum; and alloys such as stainless steel, nickel-copper alloy such as MONEL (a registered trademark of SPECIAL METALS LTD.), iron-silicon alloy, calcium-silicon alloy, aluminum-zinc-silicon alloy, and molybdenum-vanadium alloy. Particularly, the use of the electroconductive base material containing a carbon six-membered ring, such as graphite, carbon black, fullerene, CNT, or VGCF, is preferred, because hydrophilic functional groups, such as carboxyl groups, are present, although at a low density, on the surface of the electroconductive base material, and the hydrophilic polymer layer can be immobilized to the electroconductive base material by amide bonds or hydrogen bonds with the use of the functional groups. Moreover, carbon black, fullerene, CNT, or VGCF is usually supplied as a powder. Thus, when any such material is used as the electrode base material, it can be shaped by a method such as compacting for shaping, followed by firing; impregnation with petroleum or coal pitch, followed by firing; mixing with a dilution of an adhesive resin, such as polyamine (polyethyleneimine such as NIPPON SHOKUBAI's EPOMIN (registered trademark), or polyallylamine) or polyamide (polyacrylic acid), with a solvent such as methanol, adhesion of the mixture, and shaping; or impregnation with a Nafion (registered trademark of DuPont) solution (a 5% Nafion 117 solution produced by DuPont), followed by consolidation at 170°C under a pressure of the order of 50 kgf/cm².

The shaped product using fibrous graphite, such as a carbon felt, a carbon cloth, or a carbon paper, is more preferred, because it has a large surface area, and is apt to be impregnated with the hydrophilic polymer, thus imparting high adhesion to and high trapping properties for the polymer layer.

The shape, size, etc. of the electroconductive base material are not limited, and can be determined depending on the dimensions of the biological power generation apparatus, but its thickness is preferably set at 0.001 mm to 10 mm.

The hydrophilic polymer layer may be formed in such a state as to coat at least a part of the surface of the electroconductive base material. The thickness of the hydrophilic polymer layer is preferably 200 nm or less, more preferably 50 nm or less. If the thickness exceeds 200 nm, there may be a decline in performance, which is not preferred. The cause of the decline in performance remains uncertain. However, the hydrophilic polymer, which has a high molecular weight, is immobilized, while being superposed in a finely reticulated configuration, on the surface of the electroconductive base material. Thus, the terminal reductase of the microorganisms cannot enter the interior of the reticulated structure, and can reduce only the electron mediator in the vicinity of the surface of the hydrophilic polymer layer. If the electron mediator in the vicinity of the surface of the hydrophilic polymer layer and the electroconductive base material are more than 200 nm apart, it is assumed that electrons cannot efficiently migrate from the electron mediator to the electroconductive base material, and the electron mediator minimally returns to the oxidized form, thus resulting in lowered power efficiency.

Preferred examples of the hydrophilic polymer usable as a constituent of the hydrophilic polymer layer in the present invention are polymers having a hydrophilic functional group such as an amino group, an imino group, a carboxyl group, or a sulfonate group. More preferred examples are polymers containing in the structure thereof any one functional group selected from the group consisting of an amino group, an imino group, a carboxyl group, and a sulfonate group. Concretely, polyethyleneimine, polyvinylamine, polyallylamine, polyacrylic acid, or polymethacrylic acid is preferred. Alternatively, derivatives having the halogen groups of polychloromethylstyrene or the like changed to amino groups, carboxyl groups, or sulfonate groups can be used preferably. The hydrophilic polymer preferably has an average molecular weight of 10,000 or more, and more preferably has an average molecular weight of 70,000 or more.

The electron mediator usable in the present invention is a substance which has a standard electrode potential in the range of -0.13 V to -0.28 V, or which, as an anode after immobilization on the anode, has a standard electrode potential in the above range, which is stable in an environment when in the oxidized or reduced form (namely, oxidizing/reducing substance), which does not inhibit the respiration of organisms, and which can be easily reduced by organisms. Preferably, as the electron mediator usable in the present invention, there can be named one or more oxidizing/reducing substances selected from the group consisting of anthraquinone derivatives, naphthoquinone derivatives, benzoquinone derivatives, and isoalloxazine derivatives. Concretely, there can be named one or more oxidizing/reducing substances selected from the group consisting of anthraquinonecarboxylic acids (AQC), aminoanthraquinones (AAQ), diaminoanthraquinones (DAAQ), anthraquinonesulfonic acids (AQS), diaminoanthraquinonesulfonic acids (DAAQS), anthraquinonedisulfonic acids (AQDS), diaminoanthraquinonedisulfonic acids (DAAQDS), ethylanthraquinones (EAQ), methylnaphthoquinones (MNQ), methylaminonaphthoquinones (MANQ), bromomethylaminonaphthoquinones (BrMANQ), dimethylnaphthoquinones (DMNQ), dimethylaminonaphthoquinones (DMANQ), lapachol (LpQ), hydroxy(methylbutenyl)aminonaphthoquinones (ALpQ), naphthoquinonesulfonic acids (NQS), trimethylbenzoquinones (TMABQ), flavin mononucleotide, and derivatives of these. More concretely, there can be preferably used substances selected from the group consisting of anthraquinone-2-carboxylic acid (AQC), 1-aminoanthraquinone (AAQ), 1,5-diaminoanthraquinone (DAAQ), anthraquinone-2-sulfonic acid (AQS), 1,5-diaminoanthraquinone-2-sulfonic acid (DAAQS), anthraquinonedisulfonic acid (AQDS), 1,5-diaminoanthraquinonedisulfonic acid (DAAQDS), 2-ethylanthraquinone (EAQ), 2-methyl-1,4-naphthoquinone (MNQ), 2-methyl-5-amino-1,4-naphthoquinone (MANQ), 2-bromo-3-methyl-5-amino-1,4-naphthoquinone (BrMANQ), 2,3-dimethyl-1,4-naphthoquinone (DMNQ), 2,3-dimethyl-5-amino-1,4-naphthoquinone (DMANQ), lapachol (LpQ), 2-hydroxy-3-(3-methyl-2-butenyl)-5-amino-1,4-naphthoquinone (ALpQ), 1,2-naphthoquinone-4-sulfonic acid (NQS), 2,3,5-trimethylbenzoquinone (TMABQ), flavin mononucleotide (FMN), and derivatives of these. The structural formulas of the substances, which can be preferably used as the electron mediator in the present invention, are shown below.

### [Chemical formula 2]

Structural formulas of various electron mediators

| | | | |
|---|---|---|---|
| AQC | 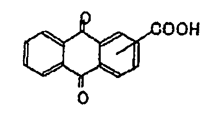 | MNQ | 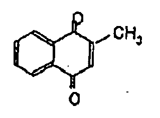 |
| AAQ | 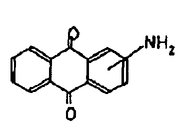 | MANQ | 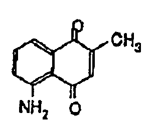 |
| DAAQ | 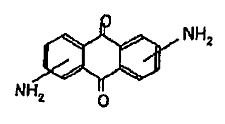 | BrMANQ | 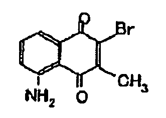 |
| AQS | 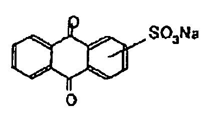 | DMNQ | 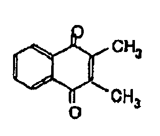 |
| DAAQS | 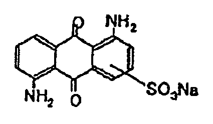 | DMANQ | 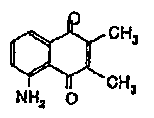 |
| AQDS | 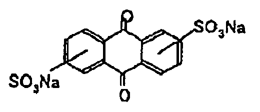 | LpQ | 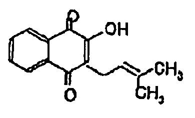 |
| DAAQDS | 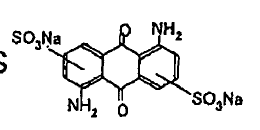 | ALpQ | 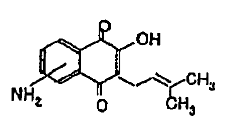 |
| EAQ | 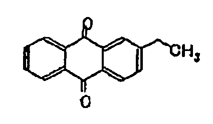 | NQS | 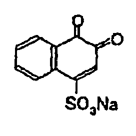 |
| | | TMABQ | 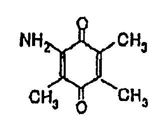 |

Moreover, the electron mediator introduced into the hydrophilic polymer layer is preferably a substance having a hydrophilic functional group. Since the electron mediator itself has the hydrophilic functional group, the resulting electron mediator-immobilized anode has stronger hydrophilicity, and functions as an anode for biological power generation more satisfactorily. As the hydrophilic functional group possessed by the electron mediator, carboxyl group, amino group, imido group, sulfonate group, etc. can be named preferably.

The electron mediator is preferably introduced at an introduction rate of preferably 30 mol% or lower, more preferably 1 to 30 mol%, based on the constituent hydrophilic monomer units of the hydrophilic polymer constituting the hydrophilic polymer layer, namely, the constituent units (polymer units) attributed to hydrophilic monomers among the respective units (polymer units) making up the hydrophilic polymer constituting the hydrophilic polymer layer.

The polymer unit, herein, refers to the minimum unit of a recurring structure composed of one molecule of the hydrophilic monomer, which is the starting material, of the molecular structure of the hydrophilic polymer. If the hydrophilic polymer is a copolymer, however, a product obtained by further dividing the minimum unit of the recurring structure for each of the hydrophilic monomer molecules, which are the starting materials, is defined as the polymer unit.

If the introduction rate of the electron mediator exceeds 30 mol%, the entire hydrophilic polymer layer becomes hydrophobic. This makes it difficult for water to enter and leave the hydrophilic polymer layer, and also presents difficulties in the supply and release of hydrogen ions indispensable to the oxidation-reduction reaction of the electron mediator such as quinones. Consequently, the resulting anode may fail to function as an anode for biological power generation.

The introduction rate of the electron mediator can be determined by measuring an increase in the weight of the electroconductive base material at the time of forming the polymer layer on the surface of the base material, and calculating the moles of the hydrophilic polymer units contained in the polymer layer carried on the surface from the increased weight.

If it is intended to enhance the physical strength of the hydrophilic polymer layer having the electron mediator introduced therein, it is advisable to crosslink the hydrophilic polymers constituting the hydrophilic polymer layer by use of a crosslinking agent (for example, an epoxy compound such as diglycidyl ether, a polyisocyanate compound, or a diamine such as propanediamine). In this case, it is sufficient for the degree of crosslinking per constituent hydrophilic monomer unit of the hydrophilic polymer to be of the order of 0.01 to 10 mol%. A higher degree of crosslinking than this range is likely to adversely affect the performance of the resulting anode for biological power generation, because the hydrophilicity of the hydrophilic polymer layer becomes lower, or the reticulated structure of the hydrophilic polymer layer becomes so dense that the contact of the terminal reductase or the like of microorganisms with it is difficult.

Examples of the introduction of the electron mediator into the hydrophilic polymer on the anode for biological power generation according to the present invention will be shown below.

### [Chemical formula 3]

In the following formulas, M represents an electron mediator:
(1) Polyethyleneimine
(2) Polyvinylamine (u=0), Polyallylamine (u=1)
(3) Polyacrylic acid (R=H), Polymethacrylic acid (R=CH₃)

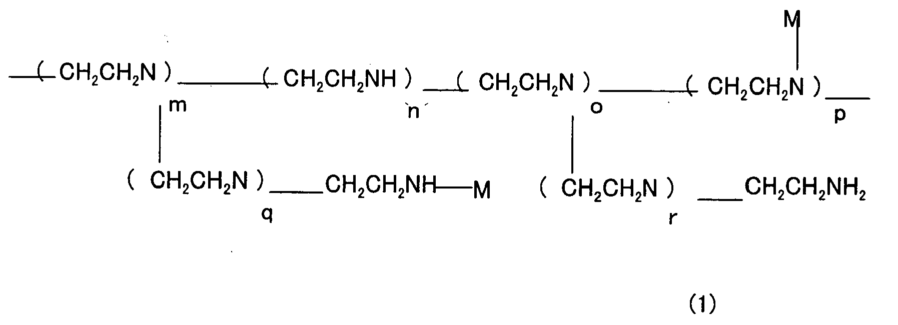

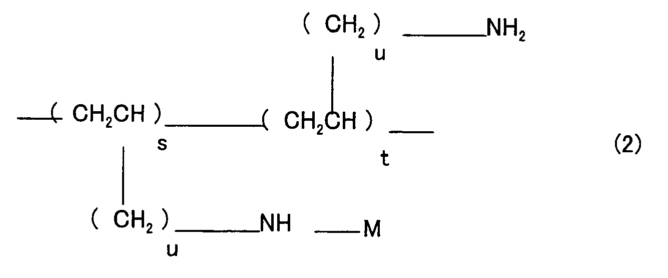

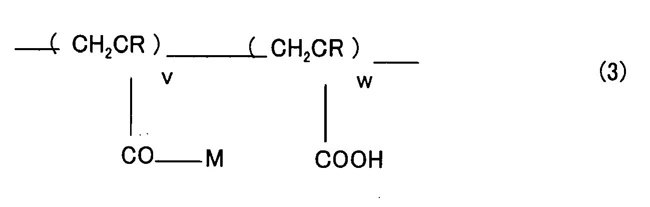

Next, the method for producing the anode for biological power generation according to the present invention will be described.

The method for producing the anode for biological power generation of the present invention comprises a hydrophilic polymer-coated electroconductive base material formation step of forming a hydrophilic polymer-coated electroconductive base material having a surface of an electroconductive base material at least partly coated with a hydrophilic polymer, and an electron mediator introduction step of introducing an electron mediator into the hydrophilic polymer-coated electroconductive base material.

The hydrophilic polymer-coated electroconductive base material formation step is preferably (1) an adhesion/immobilization step of dripping a polymer solution onto the electroconductive base material, or coating the electroconductive base material with the polymer solution, or spraying the electroconductive base material with the polymer solution, or immersing the electroconductive base material in the polymer solution, the polymer solution having a concentration of the hydrophilic polymer of 50 g/L or less, thereby adhering or fixing the hydrophilic polymer to the electroconductive base material, or (2) an immobilization step of binding a functional group of the electroconductive base material and a functional group of the hydrophilic polymer, thereby fixing the hydrophilic polymer to the electroconductive base material.

The electron mediator introduction step preferably reacts the electron mediator in a proportion of 30 mol% or less based on the constituent hydrophilic monomer units of the hydrophilic polymer constituting the hydrophilic polymer layer of the hydrophilic polymer-coated electroconductive base material, thereby introducing the electron mediator.

Each of the steps will be described below.

### <Adhesion/immobilization step>

The adhesion/immobilization step is the step of adhering or immobilizing the hydrophilic polymer to the electroconductive base material by the adhesive force or coating force of the hydrophilic polymer to coat the electroconductive base material with the hydrophilic polymer. Concretely, the hydrophilic polymer is dissolved in a solvent of relatively high polarity, such as methanol, ethanol, tetrahydrofuran, or dimethylformamide, to obtain a polymer solution. The polymer solution is adhered to the electroconductive base material by coating, dripping, spraying, or immersion. Then, the adhered polymer solution on the electroconductive base material is dried or vacuum-dried at 100 to 200°C, whereby a polymer layer can be formed. Alternatively, the electroconductive base material is rotated during dripping of the polymer solution, whereby a uniform layer can be obtained.

The hydrophilic polymer concentration in the polymer solution is 50 g/L or lower, desirably 10 g/L or lower. By setting this range, the thickness of the hydrophilic polymer layer formed by coating or impregnating the electroconductive base material with the polymer solution, followed by drying, is rendered the aforementioned preferred layer thickness (200 nm or less), so that an anode for biological power generation having preferred oxidation/reduction activity can be prepared.

To enhance the adhesiveness of the polymer layer in adhering the hydrophilic polymer to the electroconductive base material, the average molecular weight of the polymer used is preferably 70,000 or greater, more preferably 100,000 or greater. If polymers having comparable average molecular weights are compared, the polymer having a branched structure is higher in adhesiveness, and is more preferably used.

### <Immobilization step>

The immobilization step can be performed by forming amide bond or hydrogen bond between functional groups, such as a carboxyl group, present on the surface of the electroconductive base material and a functional group, such as an amino group, an imino group, or a carboxyl group, possessed by the hydrophilic polymer, thereby immobilizing the polymer onto the electroconductive base material more firmly than does mere adhesion. Concretely, the hydrophilic polymer having an amino group or an imino group is dissolved in a solvent such as tetrahydrofuran or dimethylformamide, and reacted with the electroconductive base material for several hours to several tens of hours in the presence of dicyclohexylcarbodiimide or ethyldimethylaminopropylcarbodiimide, whereby amide bond or sulfonamide bond can be formed with the carboxyl group or sulfonate group possessed by the electroconductive base material. Alternatively, hydrogen bond may be formed with the carboxyl group of the electroconductive base material by dissolving the hydrophilic polymer having a carboxyl group in a solvent such as methanol, and reacting the solution with the electroconductive base material for several hours.

In this case as well, the polymer concentration in the polymer solution is desirably adjusted to 50 g/L or lower, preferably 10 g/L or lower, because it is preferred that the layer thickness of the hydrophilic polymer layer be 200 nm or less. If the thickness of the polymer layer having an amino group or an imino group exceeds 200 nm, the excess polymer can be dissolved or removed using hydrochloric acid or the like. Similarly, if the thickness of the polymer layer having a carboxyl group or a sulfonate group exceeds 200 nm, the excess polymer can be dissolved or removed using sodium hydroxide or the like.

When such a polymer immobilization method is employed, the average molecular weight of the polymer used being 10,000 or greater suffices, because the stability of the polymer layer is higher than that in mere adhesion.

### <Electron mediator introduction step>

In the present invention, as the method for immobilizing the oxidizing/reducing substance, which is an electron mediator, to the polymer, it is preferred to use a method, which does not inhibit the oxidizing/reducing activity of the electron mediator. Moreover, the electron mediator immobilized to the polymer desirably has a nature and a form such that it is stable in an aqueous environment and it does not easily decompose or peel. Concretely, the chemical bonding method shown in the following Table 3 is suitable.

[Table 3]

**Table 3 Methods of bonding various hydrophilic polymers and electron mediators**

| Functional group of hydrophilic polymer | Functional group of electron mediator | Manner of bonding |
|---|---|---|
| Carboxyl group | Amino group | Amide bond or imide bond |
| Amino group or imido group | Carboxyl group | Amide bond or imide bond |
| | Sulfonate group | Sulfonamide bond or sulfonimide bond |
| Sulfonate group | Amino group | Sulfonamide bond or sulfonimide bond |

Thus, in immobilizing the electron mediator to the hydrophilic polymer layer in the present invention, a suitable bonding method can be selected from the methods shown in Table 3 in accordance with a combination of the functional group present in the hydrophilic polymer used and a functional group which is introduced into the electron mediator or is already present in the electron mediator.

For example, when polyethyleneimine (EPOMIN (registered trademark) P-1000, NIPPON SHOKUBAI CO., LTD.) is used as the hydrophilic polymer, and AQC (anthraquinone-2-carboxylic acid) is used as the electron mediator, the bonding method utilizing a carboxyl group possessed by AQC can be selected preferably. Concretely, a polyethyleneimine layer is formed on the surface of the electroconductive base material, and then the electroconductive base material with the polyethyleneimine layer is immersed in a solution of AQC dissolved in a solvent such as tetrahydrofuran or dimethylformamide. This system is reacted for several hours to several tens of hours in the presence of dicyclohexylcarbodiimide or ethyl-(3-dimethylaminopropyl)carbodiimide hydrochloride, whereby amide bond is formed between the imino group of polyethyleneimine and the carboxyl group of AQC. In this manner, AQC can be stably immobilized to the hydrophilic polymer layer.

To achieve the introduction rate of the electron mediator in the preferred range, the electron mediator (in this case, AQC) is added in a proportion of 0.01 to 0.3 mol per mol of the constituent hydrophilic monomer units of the hydrophilic polymer, and the above-mentioned dehydration condensation reaction is carried out. This process can be used to prepare an anode for biological power generation which has the electron mediator introduced in a proportion of 1 to 30 mol% based on the constituent hydrophilic monomer units of the hydrophilic polymer.

Crosslinking can be performed further. Crosslinking can be carried out in accordance with the usual method using a crosslinking agent (for example, an epoxy compound such as diglycidyl ether, a polyisocyanate compound, or a diamine such as propanediamine).

Similarly, when polyallylamine is used as the hydrophilic polymer, and a substance having a sulfonate group, such as AQS, AQ-2,6-DS, AQ-2,7-DS, AQ-1,5-DS, Metanil Yellow, or Methyl Orange is immobilized as the electron mediator to the hydrophilic polymer, the sulfonate group of any of these electron mediators is converted beforehand into sulfonyl chloride. Then, the electron mediator is reacted with polyallylamine in a solvent such as tetrahydrofuran, dimethylformamide, or dimethyl sulfoxide, whereby a sulfonamide bond can be formed. In this case, even if the electron mediator is introduced at a high introduction rate, hydrophilicity is retained, and a functional group introduction step to be described later is not needed. This is useful.

### [Chemical formula 4]

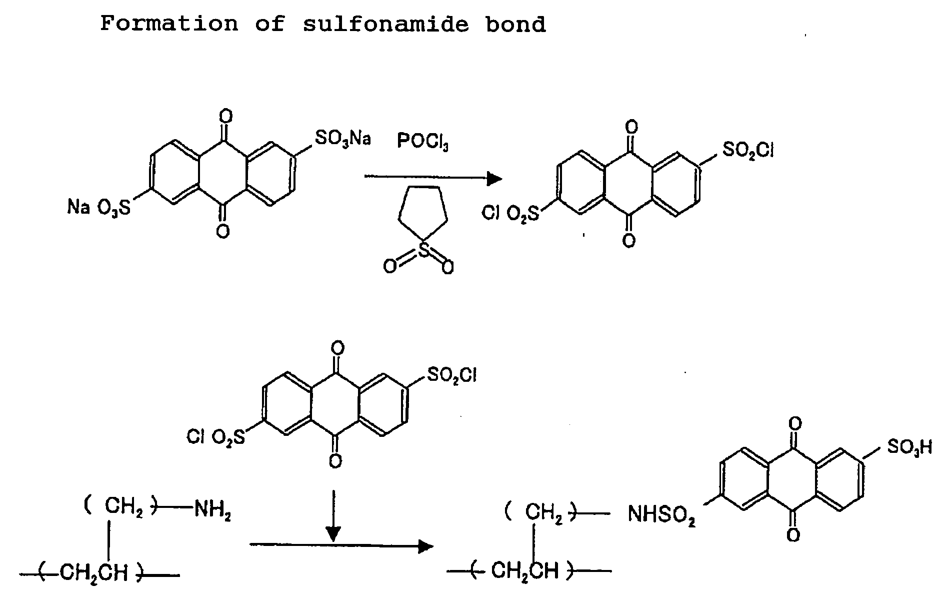

Concretely, the electron mediator is reacted in acetonitrile for 1 hour at 70°C, the acetonitrile solvent containing sulfolane in an amount corresponding to 0.5 mol per mol of the electron mediator and phosphorus oxychloride in an amount corresponding to 4 mols, per mol of the electron mediator, whereby the sulfonate groups are converted into sulfonyl chloride. The reaction mixture is filtered, washed with ice-cold water, and then dried to enable the sulfonate groups of the electron mediator to be converted into sulfonyl chloride groups. The dry product is brought into contact with the polymer units having the amino group, for example, in tetrahydrofuran under such conditions that the amount of the dry product added is 1 to 30 mol% based on the polymer units. During this contact, they are reacted at room temperature for 12 hours in the presence of triethylamine in an amount of 5 mols per mol of the sulfonyl chloride added. As a result, a sulfonamide bond can be formed between the hydrophilic polymer and the electron mediator.

Even in this case, it is preferred to set the introduction rate of the electron mediator at 30 mol% or less. If an electron mediator having a plurality of hydrophilic functional groups, such as anthraquinonedisulfonic acid, is used as the electron mediator, even after the electron mediator and the hydrophilic polymer are bound by the sulfonamide bond, one of the plural hydrophilic functional groups is used in the sulfonamide bond, but the remaining hydrophilic functional group is left (if no crosslinking reaction occurs). Thus, hydrophilicity may be maintained. In this case, the introduction rate may be controlled such that the amount of the electron mediator is 30 mol% or more based on the units of the hydrophilic polymer constituting the polymer layer.

If the electron mediator having a plurality of sulfonate groups, such as AQ-2,6-DS, AQ-2,7-DS, or AQ-1,5-DS, is used, it is preferred to perform the adhesion/immobilization step first, and then perform the electron mediator introduction step, for the following reasons: Unless immobilizing of the hydrophilic polymer to the electroconductive base material is followed by contact with the electron mediator, a crosslinking reaction via the electron mediator occurs between the polymer molecules. As a result, the polymer further increases in molecular weight, making it difficult to coat the polymer onto the electroconductive base material.

When polyacrylic acid is used as the hydrophilic polymer, and a substance having an amino group, such as aminoanthraquinone or diaminoanthraquinone, is used as the electron mediator, the bonding method utilizing the amino group can be selected preferably. Concretely, a polyacrylic acid layer or a polymethacrylic acid layer is formed on the surface of the electroconductive base material, and then the electroconductive base material with the layer is immersed in a solution of any of the electron mediators dissolved in a solvent such as tetrahydrofuran or dimethylformamide. This system is reacted for several hours to several tens of hours in the presence of dicyclohexylcarbodiimide or ethyldimethylaminopropylcarbodiimide hydrochloride, whereby an amide bond is formed between the carboxyl group of the polyacrylic acid and the amino group of the electron mediator. In this manner, the electron mediator can be stably immobilized to the polymer layer.

In this case also, it is preferred to set the introduction rate at 30 mol% or less. If an electron mediator having a plurality of hydrophilic functional groups, such as diaminoanthraquinone, is used as the electron mediator, even after the electron mediator and the hydrophilic polymer are bound by the amide bond, one of the plural hydrophilic functional groups is used in the amide bond, but the remaining hydrophilic functional group is left (if no crosslinking reaction occurs). Thus, hydrophilicity may be maintained. In this case, the introduction rate may be controlled in such a manner as to become 30 mol% or more.

If the electron mediator having a plurality of amino groups, such as 1,5-diaminoanthraquinone, is used, it is preferred to perform the adhesion/immobilization step first for the following reasons: Unless immobilization of the polymer to the electroconductive base material is followed by contact with the electron mediator, a crosslinking reaction via the electron mediator occurs between the polymer molecules. As a result, the polymer further increases in molecular weight, making it difficult to coat the polymer onto the electroconductive base material.

In the manufacturing method of the present invention, it is preferred that after the electron mediator introduction step, a functional group introduction step of introducing a hydrophilic functional group into the electron mediator be further included.

### <Functional group introduction step>

The functional group introduction step is an arbitrary step which is performed to enhance hydrophilicity if the hydrophilicity of the resulting hydrophilic polymer layer having the electron mediator immobilized thereto is not sufficient.

This step can be performed by air oxidation, electrolytic oxidation, chemical oxidation, or sulfonation. Concretely, a hydrophilic functional group can be introduced by heating at a temperature of 500°C while supplying air, heating at a temperature of 140°C during contact with 5% hypochlorous acid, or reacting in a 10% chlorosulfonic acid/dichloromethane solution for 24 hours at an ordinary temperature.

In the manufacturing method of the present invention, it is also preferred that a pretreatment step of introducing a carboxyl group into the electroconductive base material be included before the hydrophilic polymer-coated electroconductive base material formation step.

### <Pretreatment step>

The pretreatment step is a step of subjecting, beforehand, the surface of the electroconductive base material to air oxidation, electrolytic oxidation, chemical oxidation, or sulfonation to increase the density of functional groups to which the hydrophilic polymer is bonded, thereby immobilizing the hydrophilic polymer more firmly.

The density of the functional groups to be introduced at this time may be lower than that when immobilizing the electron mediator directly to the electroconductive base material. For example, the density of 0.01 µmol or more per cm² of the projected area of the base material is sufficient. Thus, it is unnecessary to provide strong electrolytic oxidation conditions or use a radical generator, as when immobilizing the electron mediator directly to the electroconductive base material as done before. The desired functional group introduction density can be obtained by a relatively mild method, such as heating at a temperature of 500°C while supplying air, heating at a temperature of 140°C during contact with 5% hypochlorous acid, or reacting in a 10% chlorosulfonic acid/dichloromethane solution for 24 hours at an ordinary temperature.

Furthermore, according to the present invention, there is also provided a biological power generation apparatus utilizing the above-described anode for biological power generation.

The biological power generation apparatus of the present invention is a biological power generation apparatus comprising an anaerobic region including microorganisms capable of growing in an anaerobic atmosphere, a solution or suspension containing an organic substance, and the above-mentioned anode for biological power generation, an aerobic region including molecular oxygen and a cathode, and a diaphragm defining the anaerobic region and the aerobic region; and wherein the anode and the cathode are electrically connected to an instrument utilizing electric power to form a closed circuit, and electric power is generated by utilizing a biological oxidation reaction using the organic substance as an electron donor within the anaerobic region, and a reduction reaction using oxygen as an electron acceptor within the aerobic region.

By so doing, there is provided a method for producing an anode having a high electron mediator immobilization density under mild conditions. By this method, a large-sized anode for biological power generation can be prepared in a simple manner, thus contributing to the upsizing of a microbial battery and the reduction of an anode manufacturing cost.

The anode for biological power generation of the present invention is used in an apparatus for treating a wet-type organic substance continuously over a long term. In this case, anaerobic microorganisms continuously proliferate in the wet-type organic substance and on the surface of the anode. Thus, the use of the anode having a structure in a too fine three-dimensional reticulated configuration, in a thin tubular configuration, or a narrow-gapped laminate plate configuration is expected to retard the decomposition of the wet-type organic substance, and lower the efficiency of power generation, owing to the blockage of a channel by microbial cells, one-sided flow, formation of a dead zone, etc. Desirably, therefore, the shape of the anode for biological power generation of the present invention is a primary structure of a wire mesh form, of a porous form, or having irregularities or ridges on the surface, and forms a secondary structure having a three-dimensional reticulated, or tubular, or laminate plate-shaped space (a channel into which the wet-type organic substance flows). It is also desirable for the channel to have an opening of several millimeters to several centimeters in accordance with the flowability of the wet-type organic substance which is a target to be treated.

In the present invention, a reduction reaction using oxygen as an electron acceptor proceeds on the cathode side which is in the aerobic region. It is preferred that at least a part of the cathode be composed of a porous material or a reticulated or fibrous material which has voids in a structure and which is electroconductive, and that the interface of contact between water and air, namely, the site where air (oxygen) and water adjoin, be constructed in the void. By so doing, the efficiency of contact between oxygen in air and water on the water surface can be increased to accelerate the reduction reaction (electrode reaction) of oxygen in air. For example, a material formed by binding electroconductive particles (carbon, inactive metal, metal oxide, etc.) to an electroconductive porous material having fine pores by a resin binder is used as the cathode. By this means, water is effectively sucked up by capillarity, hydrophilization of the surface, and so on to form water/air contact interfaces within the fine pores. As a result, oxygen in air and water can be efficiently brought into contact to accelerate the reduction reaction of oxygen.

Furthermore, it is preferred to carry on the cathode a catalyst comprising an alloy or a compound containing at least one element selected from platinum group elements, silver, and transition metal elements. By so doing, the reduction reaction (electrode reaction) of oxygen in air can be accelerated. The platinum group elements refer to platinum (Pt), ruthenium (Ru), rhodium (Rh), palladium (Pd), osmium (Os), and iridium (Ir), and all of them are effective as the electrode catalyst. Also, the cathode carrying a silver powder doped with nickel (Ni), bismuth (Bi), or titanium oxide, the cathode having silver carried on furnace black or colloidal graphite, or that using iron (Fe), cobalt (Co), phthalocyanine, hemin, perovskite, Mn₄N, metallic porphyrin, MnO₂, vanadate, or Y₂O₃-ZrO₂ compound oxide can be used preferably as the electrode catalyst.

In the present invention, the anode and the cathode are electrically connected to an instrument utilizing electric power to exchange electrons between them, forming a closed circuit. To extract the reducing power of the organic substance as electrical energy without wasteful reaction,, on the other hand, it is preferred to separate the organic substance from an oxidizing agent (a substance to be reduced), i.e., oxygen in air, so that the organic substance and oxygen in air do not contact, to prevent their contact which consumes the reducing capacity of the organic substance. To fulfill these conditions at the same time, it is desirable to separate the cathode from the microorganisms growable in the anaerobic atmosphere and the solution or suspension containing the organic substance by the diaphragm, for example, a solid polymer diaphragm. By adopting such a structure, the cathode can make easy contact with oxygen in air, and the reception and supply of hydrogen ions or the discharge of hydroxide ions can be carried out via water present in the diaphragm. Advisably, the diaphragm is minimally permeable to oxygen in air and, desirably, prevents oxygen from permeating to the anode, namely, the organic substance to lower the reducing capacity of the organic substance.

Preferably used as such a diaphragm are a fluororesin-based ion exchange membrane (cation exchange membrane) having a sulfonate group having hydrophilicity and cation exchange capacity, and a hydroxide ion (anion exchange membrane) having a quaternary ammonium salt. Also, a fluororesin-based ion exchange membrane having only a main chain portion fluorinated, and an aromatic hydrocarbon-based membrane can be used as more inexpensive diaphragms. As such ion exchange membranes, there can be preferably used commercially available products, such as NEPTON CR61AZL-389 produced by IONICS, NEOSEPTA CM-1 or NEOSEPTA CMB produced by Tokuyama Corp., Selemion CSV produced by Asahi Glass Co., Ltd., NEPTON AR103PZL produced by IONICS, NEOSEPTA AHA produced by Tokuyama Corp., and Selemion ASV produced by Asahi Glass Co., Ltd. The cation exchange membrane can be used to supply hydrogen ions and water, which are necessary for the reduction of oxygen at the cathode, from the anode to the cathode. The anion exchange membrane can be used to supply hydroxide ions, which have been generated by the reaction between water and oxygen, from the cathode to the anode.

An anion exchange membrane can be used as the diaphragm for use in the isolation of the anaerobic region and the aerobic region. Concretely, a hydroxide ion exchange membrane having an ammonium hydroxide group can be named preferably. As such anion exchange membranes, there can be preferably used commercially available products, such as NEPTON AR103PZL-389 produced by IONICS, NEOSEPTA ALE produced by Tokuyama Corp., and Selemion ASV produced by Asahi Glass Co., Ltd. If, in this case, an anionic organic substance present in the anaerobic region, such as an organic acid, passes through the diaphragm to reach the aerobic region (so-called cross flow phenomenon), oxygen is consumed there, whereupon the organic matter is wastefully oxidized and aerobic organisms proliferate in the aerobic region to contaminate the cathode. Thus, the anion exchange membrane used, desirably, has a molecular sieving effect, and has minimal permeability to anions having a molecular weight of 60 or more, such as acetic acid. As the anion exchange membrane having such a property, NEOSEPTA ALE04-4 A-0006 Membrane produced by ASTOM Corporation is available.

Besides, an MF (microfilter) or UF (ultrafilter) membrane having no functional group, a porous filter material such as ceramic or sintered glass, or a woven fabric made of nylon, polyethylene or polypropylene can be used as the diaphragm in the present invention. Preferably, any of these diaphragms having no functional group is one having a pore diameter of 5 µm or less and impermeable to a gas under non-pressurizing conditions. For example, a commercially available product, such as PE-10 membrane produced by Schweiz Seidengazefabrik or NY1-HD membrane produced by Flon Industry, can be used preferably.

In the biological power generation apparatus of the present invention, the anaerobic region is a biological reaction or bioreaction chamber for progress of the oxidation reaction by microorganisms in which electrons derived from the organic substance are finally passed on to the anode via the electron transfer system within the microorganisms' cell by the respiratory reaction of the organisms growable in the anaerobic atmosphere. The aerobic region is an air reaction chamber where a reduction reaction of oxygen as an electron acceptor proceeds. The anaerobic region of the present biological power generation apparatus is provided with the anode to which the electron mediator having a suitable potential is immobilized for transferring electrons between the anaerobic microorganisms and the anode. Thus, an effective potential cascade is formed among the final reductase of the organisms, the electron mediator, and the anode. Moreover, the electron mediator is immobilized to the hydrophilic polymer on the anode. Compared with a case where the electron mediator is directly immobilized to graphite or the like, therefore, the preparation of the anode is easy, and a large-sized apparatus can be realized.

If, in the present biological power generation apparatus, the diaphragm for defining the anaerobic region (bioreaction chamber) and the aerobic region (air reaction chamber) is a cation exchange membrane, the reduction reaction utilizing hydrogen ions at the cathode may restrict the entire reaction rate involved in the power generation of the present invention, depending on the hydrogen ion concentration conditions. That is, since the oxidation reaction at the anode is ascribed to organisms, extremely acidic conditions may be unpreferred, because they inhibit the activity of the organisms. If the hydrogen ion concentration is low, for example, at pH 5 or higher, hydrogen ions occur on the anode side, and the hydrogen ions pass through the cation exchange membrane by diffusion, to be supplied to the cathode side. At this time, the hydrogen ion concentration on the cathode side is estimated at a value of the order of 10⁻⁵ mol/L or lower. Under such low hydrogen ion concentration conditions, the rate of the oxygen reduction reaction on the cathode side lowers, and it is expected that hydrogen ions on the anode side will not migrate efficiently to the cathode side. In this case, electrical resistance of the supporting electrolyte constituting the battery (i.e., internal resistance) may become high. On the other hand, the advantage of this reaction system is that since water and hydrogen ions are constantly supplied from the anode side to the cathode side, the supply of water to the cathode side is ample, thus minimally causing the problem that oxygen on the cathode side permeates the anode side via the membrane to consume the reducing capacity on the anode side, namely, the problem of so-called cross flow.

If the cation exchange membrane is used as the diaphragm between the anaerobic region and the aerobic region, oxygen in air is consumed, generating water, during the reaction on the cathode side. Thus, constant ventilation is needed to replenish oxygen, and moisture needs to be removed to prevent excessive wetting of the cathode. However, the amount of water retention on the cathode side changes according to the humidity and flow rate of air supplied on this occasion. Thus, control of drying and humidification is desirably exercised as appropriate. Conceivable methods of ventilation by the supply and discharge of air include a method of natural convection and replacement in an open system; a method of enclosing the surroundings of the cathode with an outer shell to provide an air chamber, and forcibly ventilating the interior of the air chamber by a blower; and a method of similarly providing an air chamber, and warming the interior of the air chamber with heat generated by an oxidation/reduction reaction to cause convection, which raises air and steam for ventilation. Preferably, the method of ventilation is adopted in conformity with conditions such as the place and scale of installation of the apparatus of the present invention.

If the anion exchange membrane is used as the diaphragm between the anaerobic region and the aerobic region, namely, if there is adopted a reaction system in which hydroxide ions are generated from water and oxygen in the aerobic region, the aerobic region has a very small amount of water retention as compared with the anaerobic region. If hydroxide ions in an amount equimolar with the amount of hydrogen ions generated at the anode are generated at the cathode, therefore, pH (i.e., hydroxide ion concentration) on the cathode side can be rendered very high. The hydroxide ions at a high concentration pass through the anion exchange membrane with high efficiency, thus making it possible to render the electrical resistance of the supporting electrolyte (i.e., internal resistance) low. On the other hand, this reaction system poses the problems that since ions always migrate from the cathode side to the anode side, water supply to the cathode side is difficult, and that in accordance with the ion migration, oxygen on the cathode side may permeate to the anode side via the membrane to consume the reducing capacity of the anode side, namely, the aforementioned problem of cross flow.

In the reaction on the cathode side, moreover, oxygen and water on the cathode surface are consumed to generate hydroxide ions. Thus, ventilation may need to be always carried out to replenish oxygen, and it may be necessary to replenish moisture, thereby preventing the cathode from drying. If ventilating air is dry, in particular, and if the rate of water supply by permeation from the anode side is lower than the rate of water consumption due to evaporation and reduction reaction at the cathode, it is desirable to humidify ventilating air or add steam, thereby supplying moisture to the cathode.

As described above, the cation exchange membrane and the anion exchange membrane used as the diaphragms between the anaerobic region and the aerobic region have the effect of greatly changing the reaction system participating in the biological power generation reaction, and have their own advantages and problems to be solved. Which of the cation exchange membrane and the anion exchange membrane to adopt, should be judged in accordance with the structure and applications of the apparatus and the nature of the wet-type organic substance.

To increase the migration efficiency of hydrogen ions or hydroxide ions, the distance between the cathode and the diaphragm should advisably be as short as possible. If possible in terms of the structure of the apparatus, the cathode and the diaphragm are desirably joined together. Particularly, if a part of the diaphragm reticulately infiltrates the voids within the porous structure of the cathode electrode and is bound there, the area of the water/air contact interface formed by air contained in the porous structure and water contained in the diaphragm increases dramatically. Thus, the reducing reaction of oxygen in air can increase, to enhance biological power generation performance.

Similarly, in order to facilitate the migration of hydrogen ions and hydroxide ions and lower the electrical resistance of the electrolytic solution system, it is desirable that the distance between the anode and the diaphragm be as short as possible, and it is preferred that the anode and the diaphragm be in contact or joined together. In this case, however, the anode needs to be in a form having water permeability, for example, to be composed of a porous material or a reticulated material, or to be in a form having water passage holes, in a lattice or comb-like form, in order that hydrogen ions generated when the electron mediator turns into an oxidized type on the anode may be absorbed to the diaphragm. If disposition of the anode and the diaphragm in contact is difficult because of the structure of the apparatus, it is desirable that stirring be caused or a circulating water flow be produced to create a water flow circulating between the anode and the diaphragm, thereby facilitating the migration of hydrogen ions or hydroxide ions.

It is also preferred that the interior of the anode be impregnated with an ion-exchangeable polymer, or the anode base material or electroconductive fibers and cation exchangeable fibers (sulfonate grafted fibers) be woven together or mixed as a nonwoven fabric, whereby hydrogen ions generated on the anode side are recovered, and that the ion exchangeable polymer or fibers be extended by a certain method (for example, via a pipe of ion exchange fibers or resin like a salt bridge) for binding to the cathode, whereby a circuit of hydrogen ions is formed between the anode and the cathode.

In the biological power generation apparatus of the present invention, moreover, it is preferred to render the surface area of the anode large so that electrons of the organic substance can be passed on to the anode with high efficiency. It is also preferred that the anode and the organic substance be brought into efficient contact for efficient ion exchange between the anode and the cathode and, at the same time, the anode and the cathode be electrically insulated. Thus, the shape of the reactor, in which the bioreaction chamber and the oxygen reaction chamber are defined, is preferably a three-layer structure having the diaphragm interposed between the anode and the cathode, for example, with the anode being in a tubular form, e.g., a cylindrical form in which the organic substance flows. Consideration should be given to avoid the formation of a dead zone which allows the wet-type organic substance or proliferated organisms to dwell. As a methodology for this purpose, it is preferred to provide a stirring device or a circulating water flow-generating device within the reactor for increasing the efficiency of contact between the organic substance and the anode electrode. If the reactor is constructed of an airtight structure, it is desirable to provide a certain gas venting mechanism to prevent an anaerobic gas from building up in the reactor to decrease the effective volume. This anaerobic gas can be utilized in a method of air cleaning the flow path or channel. Also preferably, a supply mechanism and a discharge mechanism for microorganisms growable in the anaerobic atmosphere and a solution or suspension containing the organic substance are provided in the anaerobic region, and a supply mechanism and a discharge mechanism for oxygen or air are provided in the aerobic region.

The biological power generation method of the present invention is a biological power generation method comprising: providing an anaerobic region including microorganisms capable of growing in an anaerobic atmosphere, a solution or suspension containing an organic substance, and the aforementioned anode for biological power generation, an aerobic region including molecular oxygen and a cathode, and a diaphragm defining the anaerobic region and the aerobic region; electrically connecting the anode and the cathode to an instrument utilizing electric power to form a closed circuit; and utilizing the oxidation reaction of the microorganisms using the organic substance as an electron donor within the anaerobic region, and a reduction reaction using oxygen as an electron acceptor within the aerobic region to generate electric power.

In the present invention, the anode having the electron mediator immobilized thereto is brought into contact with microorganisms capable of growing in an anaerobic atmosphere and a solution or suspension containing an organic substance to proceed with an oxidation reaction by the microorganisms using the organic substance as an electron donor. This reaction on the anode side, i.e., the oxidation reaction by the microorganisms using the organic substance as an electron donor, is biochemically catalyzed by anaerobic microorganisms (facultative or obligatory anaerobic microorganisms) in a wet-type organic substance, and electrons derived from the organic substance are finally passed on to the anode via the electron transfer system within the cells of the microorganisms, mainly as a result of the anaerobic respiration of the microorganisms. To proceed efficiently with the power generation reaction according to the present invention, therefore, it is desirable to utilize microorganisms which do not terminate the electron transfer system within the cell membranes of the microorganisms, but whose extracellular membranes (outside the cell membranes) facilitate trapping of electrons by the anode, namely, which catalyze electron transfer to the anode (i.e., "electrode-active microorganisms"). Preferably used as such microorganisms catalyzing electron transfer to the anode are sulfur S(O) reducing bacteria, iron oxide (III) reducing bacteria, manganese dioxide MnO₂ reducing bacteria, and dechlorinating bacteria. Particularly preferably used as such organisms are, for example, Desulfuromonas sp., Desulfitobacterium sp., Geobivrio thiophilus, Clostridium thiosulfatireducens, Acidithiobacillus sp., Thermoterrabacterium ferrireducens, Geothrix sp.; Geobacter sp., Geoglobus sp., and Shewanella putrefaciens. The sulfur reducing bacteria, in particular, are advantageous from the aspect of energy, because the standard electrode potential of sulfur as the final electron acceptor is as low as -0.28 V, thus enabling electrons to be transmitted to the electron mediator having a lower potential than that for iron oxide (III) reducing bacteria. As such microorganisms having sulfur reducing activity, there are preferably used, for example, Desulfuromonas sp., Desulfitobacterium sp., Geobivrio thiophilus, Clostridium thiosulfatireducens, and Acidithiobacillus sp.

These microorganisms are often not predominant microorganisms in the wet-type organic substance. In practicing the method of the present invention, therefore, it is preferred, first, to inoculate the anode side with these microorganisms, thereby forming a state where these microorganisms, mainly, adhere to the surface of the anode. In order that these microorganisms may have priority in proliferating within the bioreaction chamber, there should be an increase in the area of the site where a respiratory reaction (electrode respiration) by transfer of electrons to the anode is advantageous over acid fermentation or methanogenesis in terms of energy. Concretely, it is preferred to ensure as large an anode surface area as possible within the anaerobic region (microbial reaction chamber). It is also desirable to supply a culture medium, which is suitable for the proliferation of these microorganisms, into the anaerobic region (microbial reaction chamber) after adhesion of the organisms to the anode surface. It is further desirable to accelerate the growth of these microorganisms on the anode surface by maintaining the potential of the anode at a somewhat high level. As a way of preculturing these microorganisms (group), or cultivating them within the bioreaction chamber, there can be preferably used a culture medium containing sulfur, iron oxide (III), manganese dioxide, etc. in slurry form as an electron acceptor which has been reported as a culture medium for these microorganisms (group). For example, Ancylobacter/Spirosoma medium, Desulfuromonas medium, Fe(III) Lactate Nutrient medium, etc. described in Handbook of Microbial Media (Atlas et al., 1997, CRC Press) are used preferably.

The properties of the organic substance used in the present invention are desirably such that the organic substance is a liquid or a suspension or solid in a state having the gaps saturated with water, so as not to supply molecular oxygen to the surroundings of the anode where microorganisms growable in the anaerobic atmosphere proliferate. The oxidation reaction of the organic substance around the anode is mainly catalyzed by the respiratory reaction by the microorganisms. Thus, the organic substance charged into the surroundings of the anode desirably has a small particle size of the solids, dissolves or disperses in water satisfactorily, and has a low molecular weight, and is further desirably a substance easily degradable by the microorganisms. If these conditions are not satisfied depending on the type of the organic substance used, the biodegradability of the organic substance can be enhanced by physical, chemical or biological pretreatment. Conceivable examples of such a method are crushing by a grinder, thermal decomposition, ultrasonication, ozone treatment, hypochlorite treatment, hydrogen peroxide treatment, sulfuric acid treatment, hydrolysis by organisms, acid formation, and treatment for imparting a low molecular weight. Energy required for any of these pretreatments should be balanced with an increase in power generation energy within the main reactor by the pretreatment. Optimal conditions for the pretreatment can be selected in the light of this balance.

In accordance with the usage and applications, the aforementioned channel is desirably water-washed or air-cleaned with the passage of time to remove excess microbial cells and extracellular secretions. If oxygen is contained in a gas used in the air cleaning, it has a possibility of adversely affecting the anaerobic microorganisms in the reactor which is in the anaerobic region (microbial reaction chamber). Thus, it is desirable to utilize an inert gas or an anaerobic gas generated in the reactor.

### EFFECTS OF THE INVENTION

The anode for biological power generation of the present invention is capable of efficient biological power generation by a simple apparatus and a simple method. More concretely, it can form an effective potential cascade among the final reductase of the anaerobic organisms, the electron mediator, and the anode, eventually obtain a sufficiently low anode potential, and efficiently obtain electrical energy from the wet-type organic substance.

### BRIEF DESCRIPTION OF THE DRAWINGS

[Fig. 1] Fig. 1 is a conceptual view showing the configuration of a power generation apparatus according to the present invention.
[Fig. 2] Fig. 2 is a conceptual view showing a configurational example of the power generation apparatus according to the present invention.
[Figs. 3] Fig. 3 is conceptual view showing an example of the structure of a cathode electrode which can be used in the power generation apparatus of the present invention, Fig. 3A being a sectional view, Fig. 3B being a plan view as viewed from the air chamber side in Fig. 3A, and Fig. 3C being a sectional view showing another example of a cathode electrode structure.
[Fig. 4] Fig. 4 is a conceptual view showing the configuration of a power generation apparatus according to the present invention which is used in examples.

### Description of the Numerals

- 1:: Anode for biological power generation
- 2:: Diaphragm
- 3:: Cathode
- 4:: Interior of inner tubular body
- 5:: Space around tubular body
- 6:: Conducting wire
- 7:: Air chamber
- 8:: Inflow pump
- 9:: Inlet portion
- 10:: Outlet portion
- 11:: Treated organic substance discharge portion
- 12:: Circulating pump
- 13:: Surplus sludge discharge port
- 14:: Air blower
- 15:: Exhaust port
- 16:: Condensate drain
- 17:: Connecting portion for connection to anode
- 18:: Connecting portion for connection to cathode
- 19:: Exhaust port
- 20:: Porous matrix
- 21:: Catalyst
- 22:: Air network
- 23:: Aqueous solution network
- 24:: Separator
- 25:: Cell frame (anaerobic region: anode side)
- 26:: Cell frame (aerobic region: cathode side)
- 27:: Wet-type organic substance injection port
- 28:: Decomposition waste liquor discharge port
- 29:: Air injection port
- 30:: Air discharge port
- 31:: Anaerobic region (bioreaction chamber)
- 32:: Aerobic region (air reaction chamber)

### PREFERRED EMBODIMENTS

The power generation apparatus according to the present invention will now be described more concretely by reference to the accompanying drawings. The following descriptions illustrate some concrete forms embodying the technical ideas of the present invention, and the present invention is in no way limited to these descriptions.

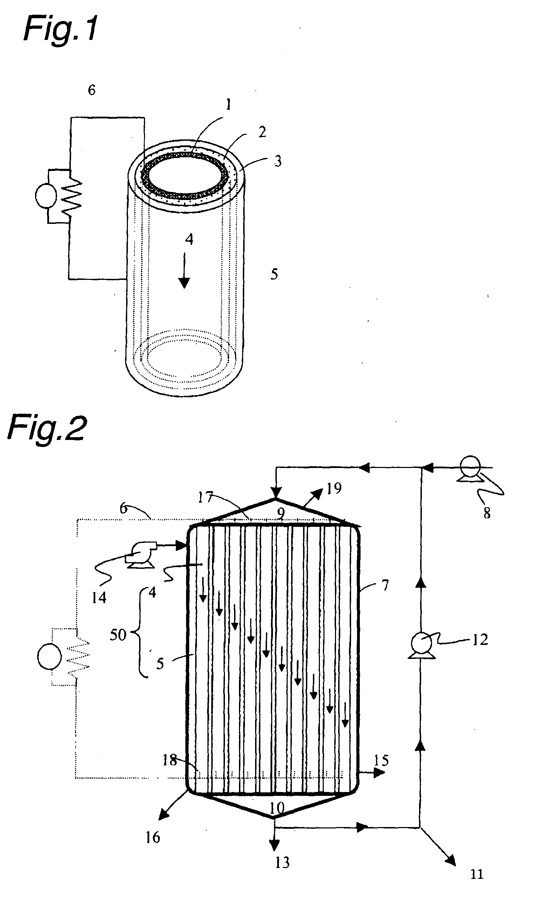

Fig. 1 shows a concrete example of a biological power generation unit according to a mode of the present invention. For example, one concrete example of the biological power generation apparatus of the present invention shown in Fig. 1 is constructed by a triple-tubular body composed of an anaerobic region 4 including an anode 1 having an electron mediator immobilized to electroconductive fibers, a diaphragm (electrolyte membrane) 2, and an aerobic region 5 including a porous cathode 3. Microorganisms growable under anaerobic conditions and a solution or suspension containing an organic substance (also called "substrate") are flowed through the anaerobic region 4 which is the innermost spatial form of the tubular body, whereas air containing molecular oxygen is allowed to exist in the aerobic region 5 which is the outermost spatial form of the tubular body. A means for supplying molecular oxygen (the means is not shown) is provided in the aerobic region 5. The porous cathode disposed within the aerobic region 5 is formed, at least partly, from an electroconductive porous material or reticulated or fibrous material having voids within a structure. The diaphragm 2 separating the anaerobic region 4 and the aerobic region 5 is constituted of a diaphragm having a large material exchange coefficient, for example, a solid polymer electrolyte membrane such as Nafion (registered trademark) produced by DuPont or NEOSEPTA (registered trademark) produced by ASTOM Corporation.

Within the anaerobic region 4, an oxidation reaction by the microorganisms using the organic substance as an electron donor proceeds. Within the aerobic region 5, a reduction reaction using oxygen as an electron acceptor proceeds. Thus, a potential difference occurs between the anode 1 and the cathode 3. In this state, the anode 1 and the cathode 3 are electrically connected to an instrument utilizing electric power by the conducting wire 6, whereby a potential difference current flows. On the other hand, ions migrate between the anaerobic region 4 and the aerobic region 5 via the electrolyte membrane 2 to form a closed circuit. As the reaction proceeds, hydrogen ions are generated in the anaerobic region 4, and an aqueous solution in the anaerobic region shows acidity. In the aerobic region 5, on the other hand, hydroxide ions are generated, and water produced in the aerobic region 5 becomes an alkaline solution.

There may be provided a channel (not shown) which recovers, as appropriate, the alkaline aqueous solution occurring within the aerobic region 5, and injects it into the anaerobic region 4. The alkaline aqueous solution is circulated from the aerobic region 5 to the anaerobic region 4 through this channel. This can prevent the hydrogen ion concentration in the anaerobic region 4 from rising extremely to inhibit the respiratory activity of the organisms, or to exceed the neutralizing ability of the basic functional groups introduced.

The internal diameter of the tubular body constituting the power generation unit can be set at several millimeters to several centimeters, or in some cases, at several tens of centimeters, depending on the flowability of the substrate. The power generation unit as shown in Fig. 1 is held by a support layer or a casing of a suitable material, whereby its physical strength can be increased. In this case, it is permissible to further wrap the tubular body with an outer shell, use the space between the outer shell and the tubular body as an air chamber, and form a means for supplying and discharging air into and from the air chamber.

In the illustrated embodiment, a three-layer structure composed of the anode 1, the diaphragm 2, and the cathode 3 each in a cylindrical shape is adopted, and the anode 1 and the cathode 3 are arranged with the diaphragm 2 being interposed therebetween. By adopting of such a configuration, the surface areas of the anode 1 and the cathode 3 can be rendered large, so that the anode 1 makes efficient contact with the substrate, and a dead zone without movement of the substrate can be minimized. Thus, ion exchange between the anode 1 and the cathode 3 can be performed with high efficiency and, at the same time, the anode 1 and the cathode 3 are electrically insulated, ensuring efficient transfer of electrons of the organic substance (substrate) to the anode 1. Moreover, water and air are brought into contact, with the interface of contact between air and water being present in the voids of the porous cathode 3. As a result, the efficiency of contact between oxygen in air and water on the water surface can be increased to proceed with the reduction reaction of oxygen on the electrode efficiently.

In the biological power generation apparatus according to the present invention, which involves the three-layer tubular body as shown in Fig. 1, an operation for power generation can be performed in such a manner that in accordance with uses, the anaerobic region including the anode is disposed outside, the aerobic region including the cathode is disposed inside, a means for passing,air through the aerobic region is placed, and the apparatus is installed in a substrate solution. In this case, the tubular body may be formed, for example, in a U-shape, and both ends of the U-shaped tubular body may be located outwardly of the surface of the substrate solution to allow passage of air through the space inside the tube. In such a configuration having the aerobic region in the inner tube, the advantage arises that there is no fear for the occurrence of clogging, even if the internal diameter of the inner tube in the aerobic region is of the order of several millimeters or smaller. Furthermore, if, in the three-layer tubular body, the inner tube is the aerobic region including the porous cathode, and the outer tube is the anaerobic region including the anode, the advantage is obtained that the surface area of the anode located outside can be larger than that of the cathode. To increase the surface area of the anode further, it is possible to provide the surface of the anode with irregularities or ridges further. The internal diameter of the cathode may be of a dimension enough for easy passage of air, although it depends on the reaction efficiency, and the internal diameter can be decreased to a value of the order of several millimeters or less, because it poses little risk for clogging. In this case, the apparatus can be constructed by further wrapping the tubular body with an outer shell, using the space outside the tubular body as a microbial reaction chamber through which the substrate flows, and disposing a means for supplying and discharging the substrate into and from the bioreaction chamber.

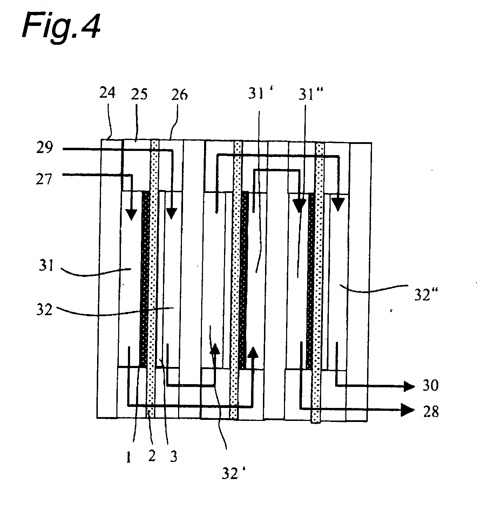

A plurality of the biological power generation units of the tubular shape as shown in Fig. 1 or of other shape can be arranged in parallel to constitute the biological power generation apparatus. For example, Fig. 2 shows a configuration in which a plurality of the biological power generation units of Fig. 1 are arranged in parallel, and Fig. 4 shows a configuration in which three of the biological power generation units each shaped like a flat plate are arranged in parallel.

In the biological power generation apparatus shown in Fig. 2, a plurality of three-layer tubular bodies (power generation units) 50, each composed of an inner tube 1 as an anode, a diaphragm 2, and an outer tube 3 as a cathode, as shown in Fig. 1, are disposed in an air chamber 7 defined by an outer shell. A substrate is distributed and poured by an inflow pump 8 into the interior 4 of each of the plurality of power generation units 50 via an inlet portion 9. The substrate subjected to oxidative decomposition there is released to the outside of the reactor via an outlet portion 10, and then discharged to the outside of the system as a treated substrate 11. A part of the substrate is returned again to the inlet portion 9 by a circulating pump 12. Contact between the anode 1 and the substrate is accelerated by this circulating flow. Biological cells and sludge accumulated in the reactor are discharged over time by opening a surplus sludge discharge port 13. The interior of the reactor can be back-washed or air-cleaned by injecting water, an inert gas, or an anaerobic gas similarly through the port 13. If an anaerobic gas appears within the reactor, it can be discharged through an exhaust port 19. This anaerobic gas may be stored and used for air cleaning, as stated earlier.

To supply oxygen to the porous cathode 3, on the other hand, aeration into the air chamber 7 can be carried out using a blower 14. If forced ventilation is not necessary, however, the air chamber 7 may be removed to constitute the apparatus such that the cathode 3, which is the outer cylinder of each power generation unit 50, is exposed to outside air. Air which has been blown flows through the space 5 between the power generation units inside the air chamber 7, contacts the cathode 3, and is then discharged through an exhaust port 15. Water generated by the reduction reaction at the cathode is either discharged through the exhaust port 15 as steam, or discharged through a condensate drain 16 as condensate.

The conducting wire 6 is electrically connected to the inner tube 1 of each of the plural power generation units 50 by a connecting portion 17 for connection to the anode, and to the outer tube 3 of each of the plural power generation units 50 by a connecting portion 18 for connection to the cathode. Here, the conducting wire 6 needs to be electrically insulated from the ambient environment in order to avoid electrical short-circuiting and an oxidation/reduction reaction on the surface of the conducting wire.

In regard to the apparatus shown in Fig. 2, it is possible to construct the tubular body 50 of each power generation unit, with the cathode as the inner tube, and the anode as the outer tube, supply air into the space inside each tubular body 50, and bring the substrate into contact with the anode on the outside of the tubular body of the power generation unit 50, in the same manner as explained above in connection with Fig. 1.

With regard to the cathode, it matters how efficiently the reduction reaction of oxygen on the electrode should be allowed to proceed. For this purpose, it is preferred that at least a part of the cathode be composed of a porous material or a reticulated or fibrous material which has voids in a structure and which is electroconductive, and water be brought into contact with air, with the interface of contact between water and air being existent in the void of the cathode. By so doing, the efficiency of contact between oxygen in air and water on the water surface is enhanced.

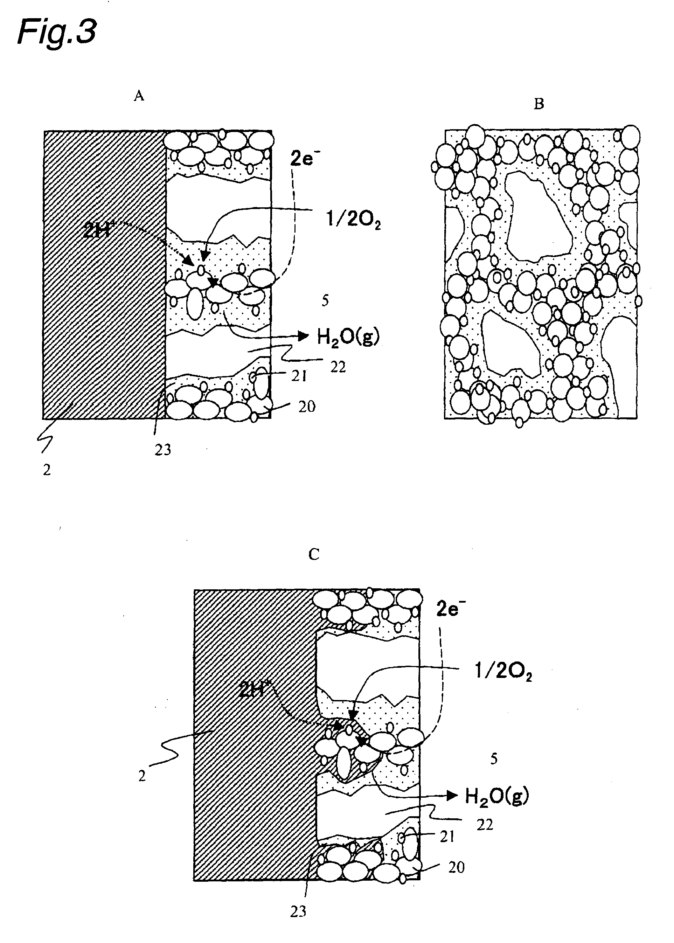

An example of the structure of the cathode which can be adopted in the biological power generation apparatus of the present invention is shown as sectional views in Figs. 3(A) and 3(B). Fig. 3(A) shows a section of the structure of the diaphragm 2 and the cathode 3, and Fig. 3(B) is a view of Fig. 3(A) as viewed from the air chamber 5. Fig. 3(A) also shows a reaction system in which the diaphragm 2 is a cation exchange membrane. The cathode shown in Figs. 3(A), 3(B) has a structure in which a catalyst 21 comprising an alloy or compound containing at least one element selected from platinum group elements, silver, and transition metal elements is preferably carried on a porous matrix 20 (Fig. 3(A)), and exhibits a reticulated structure when viewed from the direction of the air chamber 5 (Fig. 3(B)). By taking on such a structure, the cathode can contact oxygen in air while sucking up water via the water surface or the diaphragm by the hydrophilicity of the base material. As a result, an air network 22 and an aqueous solution network 23 can be provided in the microstructure of the electrode to increase the area of the air/water contact interface, thereby raising the efficiency of contact between oxygen in air and water on the water surface. Oxygen and hydrogen ions react on the catalyst 21, thereby enabling the reduction reaction of oxygen in air to be accelerated.

Fig. 3(C) shows another example of a cathode structure which can be adopted in the biological power generation apparatus of the present invention. Fig. 3(C) also shows a reaction system in which the diaphragm 2 is a cation exchange membrane. The cathode shown in Fig. 3(C) is in a configuration in which a solution comprising the same material as that of the diaphragm 2 is coated on the surface of the porous matrix 20 joined to the diaphragm 2, and dried to infiltrate a part of the diaphragm structure into the fine pores of the porous matrix 20. By adoption of such a configuration, the efficiency of ion exchange and the utilization rate of the catalyst can be increased to accelerate the reduction reaction of oxygen in air.

The present invention will be described in detail by reference to the following Examples, which in no way limit the invention.

In the following Examples and Comparative Examples, a biological power generation apparatus for a laboratory, which is shown in Fig. 4, was used, except that the anode for biological power generation was changed.

The biological power generation apparatus shown in Fig. 4 comprised a stacked structure in which two cell frames (25, 26) each 100 mm long on a side and 10 mm thick were disposed adjacently, and two separators 24 of the same dimensions were stacked on both sides of the cell frames, with the separators 24 being opposite side surfaces of the stacked structure. Within this stacked structure, an anode 1, a cation exchange membrane (Nafion produced by DuPont) as a diaphragm 2, and a platinum-carried carbon paper as a cathode 3 were disposed in contact in this order. The anode 1, the diaphragm 2, and the cathode 3 were adhered in this order with the use of a Nafion solution. As a result, an anaerobic region 31 was defined between one frame 24 and the anode 1, while an aerobic region 32 was defined between the other frame 24 and the cathode 3. This stacked structure was used as a unit, and three of the units were stacked, with the back of the first unit being adjacent to the back of the second unit, and the front of the second unit being adjacent to the front of the third unit. The frame 24 between the adjacent units was shared by the adjacent units. In this manner, the power generation apparatus for experiments was constructed. A substrate solution channel 27-28 was formed for the anaerobic regions 31, 31' and 31" of the three units, whereas an air channel 29-30 was formed for the aerobic regions 32, 32', 32". The respective anodes 1 and the respective cathodes 3 were electrically connected in series by a conducting wire to form a closed circuit via an ammeter and a variable resistor (instruments utilizing electric power), although this is not illustrated. The external resistance of the circuit including the ammeter was 10 Ω or less, if the value of the variable resistor was 0 Ω. The total effective volume of the three power generation units in the present apparatus was 108 mL for each of the anaerobic region (bioreaction chamber) and the aerobic region (air reaction chamber). The total surface area of the electrodes was 108 cm² for each of the anode and the cathode.

### [Example 1, Comparative Examples 1 to 2]

### Example 1

In Example 1, CARBOLON (registered trademark) Felt GF-20 produced by Nippon Carbon Co., Ltd. was used as a carbon felt which is the electroconductive base material of the anode 1. Polyacrylic acid (molecular weight: about 1,000,000) produced by Wako Pure Chemical Industries, Ltd. was used as the hydrophilic polymer. As the electron mediator, 1-aminoanthraquinone (AAQ) produced by Wako Pure Chemical Industries, Ltd. was used.

In Example 1, the anode (1) installed in the biological power generation apparatus was prepared by the method described below. Polyacrylic acid was dissolved in methanol to a concentration of 5 g/L to prepare a polymer solution. The graphite felt was immersed in the polymer solution, which was shaken for 30 seconds. Then, the graphite felt was withdrawn and, after the excess polymer solution was removed, the graphite felt was dried for 24 hours at 100°C to form a hydrophilic polymer layer. An increase in the weight of the graphite felt by this operation was measured, and the thickness of the hydrophilic polymer layer was calculated from the surface area of the felt measured with a specific surface area meter, and the specific gravity 0.8 of the solidified hydrophilic polymer. This thickness was estimated at an average of 20 nm.

The thus obtained polymer-coated felt was immersed in dimethylformamide and, with gentle stirring, AAQ was added in an amount of 30 mol% based on the constituent hydrophilic monomer units of the hydrophilic polymer. The system was reacted for 72 hours at room temperature in the presence of dicyclohexylcarbodiimide to form an amide bond between the amino group of AAQ and the carboxyl group of the polymer, thereby introducing the electron mediator into the hydrophilic polymer layer. The thus treated felt was washed with dimethylformamide and then with methanol, and then dried to obtain an anode for biological power generation (1), which was used as the anode 1 of the biological power generation apparatus.

The average introduction rate of the AAQ units to the polymer units of polyacrylic acid of the anode (1) was 25 mol%, which was 10 µmol per cm² of the projected area of the electrode. This value was determined by measuring the alkali neutralization power of the polymer layer before introduction of AAQ and that after introduction of AAQ, comparing the values before and after introduction of AAQ, and calculating the amount of a decrease in the alkali neutralization power.

Using the anode (1), electron discharge was performed by shifting an applied potential from -0.28 V to -0.18 V (hydrogen standard electrode potential) in an aqueous solution at pH 7. Thus, it can be said that the standard electrode potential E₀' of the anode (1) resides between -0.28 V and -0.18 V.

### Comparative Example 1

In Comparative Example 1, CARBOLON (registered trademark) Felt GF-20 produced by Nippon Carbon Co., Ltd. was used as a carbon felt which is the electroconductive base material of the anode. Polyacrylic acid (molecular weight: about 1,000,000) produced by Wako Pure Chemical Industries, Ltd. was used as the hydrophilic polymer. As the electron mediator, 1-aminoanthraquinone (AAQ) produced by Wako Pure Chemical Industries, Ltd. was used.

In Comparative Example 1, a control anode (1) installed in the biological power generation apparatus was prepared by the method described below. Polyacrylic acid was dissolved in methanol to a concentration of 300 g/L to prepare a polymer solution. The graphite felt was immersed in the polymer solution, which was shaken for 30 seconds. Then, the graphite felt was withdrawn and, after the excess polymer solution was removed, the graphite felt was dried for 24 hours at 100°C to form a hydrophilic polymer layer. The thickness of the hydrophilic polymer layer was calculated in the same manner as in Example 1, and was estimated at an average of 3500 nm.

AAQ was introduced into, and immobilized to, the so obtained hydrophilic polymer-coated felt (electroconductive base material) in an addition proportion of 30 mol% based on the constituent hydrophilic monomer units of the hydrophilic polymer in the same manner as in Example 1. The thus treated felt was used as the control anode (1) in Comparative Example 1.

The average introduction rate of the AAQ units to the constituent hydrophilic monomer units of the hydrophilic polymer of the control anode (1) was 5 mol%, which was 350 µmol per cm² of the projected area of the electrode. Using the control anode (1), electron discharge was performed by shifting an applied potential from -0.28 V to -0.13 V (hydrogen standard electrode potential) in an aqueous solution at pH 7. Thus, the standard electrode potential E₀' of the control anode (1) is considered to reside between -0.28 V and -0.13 V.

### Comparative Example 2

In Comparative Example 2, CARBOLON (registered trademark) Felt GF-20 produced by Nippon Carbon Co., Ltd. was used as a carbon felt which is the electroconductive base material of the anode 1. Polyacrylic acid (molecular weight: about 1,000,000) produced by Wako Pure Chemical Industries, Ltd. was used as the hydrophilic polymer. As the electron mediator, 1-aminoanthraquinone (AAQ) produced by Wako Pure Chemical Industries, Ltd. was used.

In Comparative Example 2, a control anode installed in the biological power generation apparatus was prepared by the method described below. Polyacrylic acid was dissolved in methanol to a concentration of 5 g/L, as in Example 1, to prepare a polymer solution. The graphite felt was immersed in the polymer solution, which was shaken for 30 seconds. Then, the graphite felt was withdrawn and, after the excess polymer solution was removed, the graphite felt was dried for 24 hours at 100°C to form a hydrophilic polymer layer. The thickness of the hydrophilic polymer layer was calculated in the same manner as in Example 1, and was estimated at an average of 18 nm.

AAQ was introduced into, and immobilized to, the thus obtained hydrophilic polymer-coated felt (electroconductive base material) in an addition proportion equimolar with the constituent hydrophilic monomer units of the hydrophilic polymer. The thus treated felt was used as a control anode (2) in Comparative Example 2.

The average introduction rate of the AAQ units to the polymer units of the polyacrylic acid of the control anode (2) was 86 mol%, which was 34 µmol per cm² of the projected area of the electrode. Using the control anode (2), electron discharge was performed by shifting an applied potential from -0.28 V to -0.13 V (hydrogen standard electrode potential) in an aqueous solution at pH 7. Thus, the standard electrode potential E₀' of the control anode (2) is considered to reside between -0.28 V and -0.13 V.

### <Power generation performance>

Using the biological power generation apparatus for a laboratory which is shown in Fig. 4, the power generation performance of the anode for biological power generation produced in Example 1 and those of Comparative Examples 1 to 2 were compared.

Before operation of the biological power generation apparatus was started, 1 mL of sulfur-reducing bacteria enrichment cultures were added to each of the anaerobic regions 31, 31', 31" of the biological power generation apparatus. The sulfur-reducing bacteria enrichment cultures used here were obtained in the following manner: Kuroboku soil (0.1 g) was used as a source for inoculation with the bacteria. Desulfuromonas medium (Table 4) described in Handbook of Microbial Media (Atlas et al., 1997, CRC Press) was poured (100 mL) into a vial with a volume of 130 mL, and the gas phase inside the vial was purged with a nitrogen gas. The inoculum was added into the culture medium, the vial was sealed, and shaking incubation was performed at 28°C. Two weeks later, 5 mL of the culture broth was transferred to and subcultured in a fresh vial. This procedure was repeated 5 times, and the culture broth obtained after 10 weeks was used as the sulfur-reducing bacteria enrichment cultures. The soil as the source of inoculation is not limited to Kuroboku soil, but may be loam or silt.

A substrate solution was prepared by mixing 0.01 g/L yeast extract to 0.1 mol/L of an aqueous glucose solution as a model of a wet-type organic substance. The resulting substrate solution was used for experiments.

Replacement of the solution was not done for 10 days after start of the operation in order to wait for the deposition of the organisms within the anaerobic region (bioreaction chamber). During this period, the above-mentioned Desulfuromonas medium (Table 4) was filled in the anaerobic region (bioreaction chamber) to encourage the dominance of the sulfur-reducing bacteria.

[Table 4]

**Table 4 Compositions of Desulfuromonas media (pH 7.2±0.2)**

| | |
|---|---|
| Sulfur (colloidal) | 10 g |
| Nutrient liquid 1 (in 1 L {KH₂PO₄ 1g, MgCl₂·6H₂O 0.4g, NH₄Cl 0. 3g, CaCl₂·2H₂O 0.1g, 2 mol/L HCl 4.0mL}) | 1 L |
| Nutrient liquid 3 (in 100 mL {NaHCO₃ 10g}) | 20 mL |
| Nutrient liquid 4 (in 100 mL {Na₂S·9H₂O 5g}) | 6 mL |
| Nutrient liquid 5 (in 200 mL {pyridoxamine dihydrochloride 0.01g, nicotinic acid 4mg, p-aminobenzoic acid 2mg, thiamine 2mg, cyanocobalamin 1mg, calcium pantothenate 1mg, biotin 0.5mg}) | 5 mL |
| Nutrient liquid 2 (in 1 L {EDTA disodium salt 5.2g, CoCl₂·6 H₂O 1.9g, FeCl₂·4H₂O 1.5g, MnCl₂·4H₂O 1g, ZnCl₂ 0.7g, H₃BO₃ 0.62g, Na₂MoO₄ · 2H₂O 0.36g, NiCl₂ · 6H₂O 0.24g, CuCl₂ · 2H₂O 0.17g}) | 1 mL |

Starting 10 days after start of the operation, an acclimatization run was performed, with the retention time of the substrate solution being set at 2 days. Starting 20 days after start of the operation, a normal run was performed, with the retention time within the anaerobic region being set at 500 minutes, and the amount of current and voltage between the anode and the cathode were measured. The supply of air to the aerobic region was carried out, with a retention time being 0.5 minute.

In Example 1 and Comparative Examples 1 and 2, the cathode and the anode were always in an electrically connected state, and the variable resistance was adjusted to obtain the maximum amount of electric power, during the course including the period of the acclimatization run. The results of the test are shown in Table 5.

[Table 5]

**Table 5 Results of power generation test**

| Experimental system | Specifications for anode | Average current produced (mA) | Average voltage (mV) | Average output (W) |
|---|---|---|---|---|
| Ex. 1 | Thickness of hydrophilic polymer layer 20 nm, AAQ introduction rate 25 mol% of anode | 104 | 380 | 4.0x10⁻² |
| Comp. Ex. 1 | Thickness of hydrophilic polymer layer 3500 nm, AAQ introduction rate 5 mol% of anode | 5 | 150 | 7.5x10⁻⁴ |
| Comp. Ex. 2 | Thickness of hydrophilic polymer layer 18 nm, AAQ introduction rate 86 mol% of anode | 13 | 220 | 2.9x10⁻³ |

The average power generated during the measurement period was found to be 53 times higher when the polymer layer thickness was small and the AAQ introduction rate was 30 mol% or lower (Example 1) than when the polymer layer thickness was large (Comparative Example 1). In the case of Example 1, power generated was 14 times higher than when the AAQ introduction rate reached 86 mol% and the hydrophilicity of the polymer layer became low (Comparative Example 2). These results showed the superiority, as the anode for biological power generation, of the hydrophilic polymer-coated electrode having a small polymer layer thickness and an electron mediator introduction rate kept to 30 mol% or lower.

### [Examples 2 to 3, Comparative Example 3]

Using the biological power generation apparatus for a laboratory shown in Fig. 4, power generation performance and stability of the hydrophilic polymer layer-coated anode were compared. In Examples 2 to 4 and Comparative Example 3, the electroconductive base material (carbon felt) was impregnated with an aqueous solution of polyethyleneimine (EPOMIN (registered trademark) P-1000 produced by NIPPON SHOKUBAI CO., LTD.) having a molecular weight of 70,000 to form a hydrophilic polymer layer. To the hydrophilic polymer layer, anthraquinone-2-sulfonic acid (AQS) was immobilized, and the product was used as an anode. The AQS used was converted to sulfonyl chloride beforehand by the following method.

AQS was reacted in acetonitrile for 1 hour at 70°C, the acetonitrile containing sulfolane in an amount corresponding to 0.5 mol per mol of AQS and phosphorus oxychloride in an amount corresponding to 4 mols per mol of AQS, whereby the sulfonate group was converted into sulfonyl chloride. The product was cooled, then filtered, washed with ice-cold water, and then dried to obtain a flesh-colored powder of the AQS chloride.

### Example 2

In Example 2, an anode (2) installed in the biological power generation apparatus was prepared by the method described below. Polyethyleneimine was dissolved in water to a concentration of 10 g/L to prepare a hydrophilic polymer solution. A graphite felt as an electroconductive base material was immersed in the hydrophilic polymer solution, which was shaken for 30 seconds. Then, the graphite felt was withdrawn and, after the excess hydrophilic polymer solution was removed, the graphite felt was dried for 24 hours at 100°C to form a hydrophilic polymer layer. An increase in the weight of the graphite felt by this operation was measured, and the thickness of the hydrophilic polymer layer was calculated from the surface area of the felt measured with a specific surface area meter, and the specific gravity 1.2 of the solidified polymer. This thickness was estimated at an average of 23 nm.

The so obtained hydrophilic polymer-coated felt (electroconductive base material) was immersed in tetrahydrofuran and, with gentle stirring, the above-mentioned AQS chloride was added in an amount of 30 mol% based on the constituent hydrophilic monomer units of the hydrophilic polymer. The system was reacted for a period of the order of 12 hours at room temperature in the presence of triethylamine in an amount corresponding to 5 moles per mol of the added AQS chloride. By this measure, a sulfonamide bond was formed between the hydrophilic polymer and the AQS chloride, whereby the electron mediator was introduced. The thus treated felt was washed with methanol, and then dried to obtain an anode for biological power generation (2), which was used as the anode 1 of the biological power generation apparatus.

The average introduction rate of the AQS units to the constituent hydrophilic monomer units of the hydrophilic polymer of the anode (2) was 28 mol%, which was 13 µmol per cm² of the projected area of the electrode. This value was determined by measuring the acid neutralization power of the polymer layer before introduction of AQS and that after introduction of AQS, comparing the values before and after introduction of AQS, and calculating the amount of a decrease in the acid neutralization power.

Using the anode (2), electron discharge was performed by shifting an applied potential from -0.28 V to -0.18 V (hydrogen standard electrode potential) in an aqueous solution at pH 7. Thus, it can be said that the standard electrode potential E₀' of the anode (2) resides between -0.28 V and -0.18 V.

### Example 3

In Example 3, an anode (3) installed in the biological power generation apparatus was prepared by the method described below. Polyethyleneimine was dissolved in water to a concentration of 10 g/L to prepare a hydrophilic polymer solution. A graphite felt as an electroconductive base material was immersed in the hydrophilic polymer solution and, with gentle stirring, ethyl(3-dimethylaminopropyl)carbodiimide hydrochloride was added. The reaction was performed for 72 hours to form an amide bond between the graphite and polyethyleneimine. Then, the graphite felt was taken out from the solution, and after the excess hydrophilic polymer solution was removed, the graphite felt was dried for 24 hours at 100°C to form a hydrophilic polymer layer. The product was washed with 0.1 mol/L of a sodium hydroxide solution, and then the procedure mentioned below was performed. The thickness of the hydrophilic polymer layer was estimated at an average of 21 nm.

The thus obtained hydrophilic polymer-coated felt (electroconductive base material) was immersed in tetrahydrofuran, and AQS chloride was added in an amount of 30 mol% based on the constituent hydrophilic monomer units of the hydrophilic polymer, as in Example 2. By this measure, a sulfonamide bond was formed to introduce the electron mediator. The thus treated felt was washed with methanol, and then dried to obtain an anode for biological power generation (3), which was used as the anode 1 of the biological power generation apparatus.

The average introduction rate of the AQS units to the constituent hydrophilic monomer units of the hydrophilic polymer of the anode (3) was 27 mol%, which was 12 µmol per cm² of the projected area of the electrode.

Using the anode (3), electron discharge was performed by shifting an applied potential from -0.28 V to -0.18 V (hydrogen standard electrode potential) in an aqueous solution at pH 7. Thus, it can be said that the standard electrode potential E₀' of the anode (3) resides between -0.28 V and -0.18 V.

### Example 4

In Example 4, an anode (4) installed in the biological power generation apparatus was prepared by the method described below. Polyethyleneimine was dissolved in water to a concentration of 10 g/L to prepare a hydrophilic polymer solution. A graphite felt as an electroconductive base material was immersed in the hydrophilic polymer solution under the same conditions as in Example 2. The graphite felt was withdrawn and, after the excess hydrophilic polymer solution was removed, the graphite felt was dried for 24 hours at 100°C to form a hydrophilic polymer layer. The thickness of the hydrophilic polymer layer was estimated at an average of 23 nm.

The thus obtained hydrophilic polymer-coated felt (electroconductive base material) was immersed in tetrahydrofuran, and the aforementioned AQS chloride was added in an amount equimolar with the constituent hydrophilic monomer units of the hydrophilic polymer. A sulfonamide bond was formed under the same conditions as in Example 3 to introduce the electron mediator. The thus treated felt was immersed in a dichloromethane solvent, and chlorosulfonic acid was added in a concentration of 10% (V/V). The system was reacted for 24 hours to carry out sulfonation. The sulfonated felt was washed with isopropanol for 24 hours, then washed with ethanol, and further washed with water to convert sulfonyl chloride to sulfonic acid. Then, the product was dried to obtain an anode for biological power generation (4), which was used as the anode 1 of the biological power generation apparatus.

The average introduction rate of the AQS units to the constituent hydrophilic monomer units of the hydrophilic polymer of the anode (4) was 83 mol%, which was 39 µmol per cm² of the projected area of the electrode.

Using the anode (4), electron discharge was performed by shifting an applied potential from -0.28 V to -0.13 V (hydrogen standard electrode potential) in an aqueous solution at pH 7. Thus, it can be said that the standard electrode potential E₀' of the anode (4) resides between -0.28 V and -0.13 V.

### Comparative Example 3

In Comparative Example 3, a control anode (3) installed in the biological power generation apparatus was prepared by the method described below. A hydrophilic polymer layer was formed in the same manner as in Example 4, and AQS chloride was added in an amount equimolar with the constituent hydrophilic monomer units of the hydrophilic polymer. A sulfonamide bond was formed under the same conditions as in Example 4. The thus treated felt was used, unchanged, as the control anode (3) of the biological power generation apparatus in Comparative Example 3.

The average introduction rate of the AQS units to the constituent hydrophilic monomer units of the hydrophilic polymer in polyethyleneimine of the control anode (3) was 84 mol%, which was 39 µmol per cm² of the projected area of the electrode. Using the control anode (3), electron discharge was performed by shifting an applied potential from -0.28 V to -0.13 V (hydrogen standard electrode potential) in an aqueous solution at pH 7. Thus, it can be said that the standard electrode potential E₀' of the control anode (3) resides between -0.28 V and -0.13 V.

### <Power generation performance>

A power generation test was conducted by means of the biological power generation apparatus shown in Fig. 4 with the use of each of the anodes obtained in Examples 2 to 4 and Comparative Example 3. The results of the test are shown in Table 6.

[Table 6]

**Table 6 Results of power generation test**

| Experimental system | Specifications for anode | Average current produced (mA) | Average voltage | Average output (W) |
|---|---|---|---|---|
| Ex. 2 | Thickness of hydrophilic polymer layer 23 nm, AQS introduction rate 28 mol% | 112 | 410 | 4.6×10⁻² |
| Ex. 3 | Dehydration condensation with graphite, Thickness of hydrophilic polymer layer 21 nm, AQS introduction rate 27 mol% | 115 | 405 | 4.7×10⁻² |
| Ex. 4 | Thickness of hydrophilic polymer layer 23 nm, AQS introduction rate 83 mol%, sulfonation | 99 | 382 | 3.8×10⁻² |
| Comp. Ex. 3 | Thickness of hydrophilic polymer layer 23 nm, AQS introduction rate 84 mol% | 17 | 250 | 4.3×10⁻³ |

The average power generated during the measurement period showed nearly the same values in Examples 2 and 3, in which the hydrophilic polymer layer thickness was small, and the AQS introduction rate was 30 mol% or less, regardless of whether dehydration condensation was performed beforehand. Even when the AQS introduction rate was as high as 83 mol% (Example 4), a slightly smaller amount of power generation was obtained by performing sulfonation after AQS introduction. When the treated product having a high amount of AQS introduction was used unchanged as the anode (Comparative Example 3), on the other hand, the amount of power generation decreased to a 1/9 level, as compared with the sulfonated product (Example 4).

These results showed that the hydrophilic polymer layer-coated electrode having a small hydrophilic polymer layer thickness, and an electron mediator introduction rate kept to 30 mol% or lower was superior as the anode for biological power generation, and that even when the introduction rate of the electron mediator was high, the performance of the anode for biological power generation was restored by introducing the hydrophilic group.

### <Stability of anode>

The anodes prepared by the methods of Example 2 and Example 3 were each immersed in 1 mol/L of an aqueous solution of hydrochloric acid and, with gentle stirring, the anode was reacted for 30 minutes. The polymer of Example 2 dissolved at a rate of 90% or more, and fell off the graphite. On the other hand, the polymer remained detached by about 10% from the anode prepared in Example 3. It is thought that the polymer layer of the anode prepared in Example 3 is bound to the graphite by an amide bond, so that dissolution with the acid minimally occurred. Thus, the anode prepared by the method of Example 3 can be said to have higher durability than the anode prepared by the method of Example 2.

### Example 5

An anode (5) installed in the biological power generation apparatus was prepared by the method described below. Polyethyleneimine was dissolved in water to a concentration of 30 g/L to prepare a hydrophilic polymer solution. A graphite felt as an electroconductive base material was immersed in the hydrophilic polymer solution under the same conditions as in Example 2. Then, the graphite felt was withdrawn and, after the excess hydrophilic polymer solution was removed, the graphite felt was dried for 24 hours at 100°C to form a hydrophilic polymer layer. The thickness of the hydrophilic polymer layer was estimated at an average of 100 nm.

The thus obtained hydrophilic polymer-coated felt (electroconductive base material) was immersed in tetrahydrofuran, and AQS chloride was added in an excess amount (100 mol% or more) with respect to the constituent hydrophilic monomer units of the hydrophilic polymer. A sulfonamide bond was formed under the same conditions as in Example 3 to introduce the electron mediator. The resulting anode (5) was used as the anode 1 of the biological power generation apparatus.

The average introduction rate of the AQS units to the constituent hydrophilic monomer units of the hydrophilic polymer of the anode (5) was 28 mol%, which was 57 µmol per cm² of the projected area of the electrode. Using the anode (5), an applied potential was shifted from -0.28 V to -0.13 V (hydrogen standard electrode potential) in an aqueous solution at pH 7, whereby electric current was generated. Thus, it can be said that the standard electrode potential E₀' of the anode (5) resides between -0.28 V and -0.13 V.

### Comparative Example 4

In Comparative Example 4, a control anode (4) installed in the biological power generation apparatus was prepared by the method described below. Polyethyleneimine was dissolved in water to a concentration of 80 g/L to prepare a hydrophilic polymer solution. A graphite felt as an electroconductive base material was immersed in the hydrophilic polymer solution under the same conditions as in Example 2. Then, the graphite felt was withdrawn and, after the excess hydrophilic polymer solution was removed, the graphite felt was dried for 24 hours at 100°C to form a hydrophilic polymer layer. The thickness of the hydrophilic polymer layer was estimated at an average of 250 nm.

The thus obtained hydrophilic polymer-coated felt (electroconductive base material) was immersed in tetrahydrofuran, and AQS chloride was added in an excess amount (100 mol% or more) with respect, to the constituent hydrophilic monomer units of the hydrophilic polymer. A sulfonamide bond was formed under the same conditions as in Example 3 to introduce the electron mediator. The resulting product was used as the anode 1 of the biological power generation apparatus in Comparative Example 4.

The average introduction rate of the AQS units to the constituent hydrophilic monomer units of the hydrophilic polymer in polyethyleneimine of the control anode (4) was 23 mol%, which was 117 µmol per cm² of the projected area of the electrode. Using the control anode (4), an applied potential was shifted from -0.28 V to -0.13 V (hydrogen standard electrode potential) in an aqueous solution at pH 7, whereby electric current was generated. Thus, it can be said that the standard electrode potential E₀' of the control anode (4) resides between -0.28 V and -0.13 V.

### <Power generation performance>

A power generation test was conducted by means of the biological power generation apparatus shown in Fig. 4 with the use of each of the anodes obtained in Example 5 and Comparative Example 4. The results of the test are shown in Table 7.

**[Table 7]**

| Experimental system | Specifications for anode | Average current produced (mA) | Average voltage (mV) | Average output (mW) |
|---|---|---|---|---|
| Ex. 5 | Thickness of hydrophilic polymer layer 100 nm, AQS introduction rate 28 mol% | 98 | 360 | 35 |
| Comp. Ex. 4 | Thickness of hydrophilic polymer layer 250 nm, AQS introduction rate 23 mol% | 12 | 280 | 3.4 |

Both a potential difference (voltage) generated and an electric current produced were higher when the polymer layer thickness was 100 nm (Example 5) than when the polymer layer thickness was 250 nm (Comparative Example 4). Electric power about 10 times as high was found to be generated as output.

### [Example 6, Comparative Examples 5 to 6]

Using the biological power generation apparatus for a laboratory shown in Fig. 4, power generation performances of the anodes having different potentials were compared.

An electroconductive base material (graphite felt) was impregnated with an aqueous solution of polyethyleneimine (EPOMIN (registered trademark) P-1000 produced by NIPPON SHOKUBAI CO., LTD.) having a molecular weight of 70,000 to form a hydrophilic polymer layer. Polyethyleneimine was dissolved in water to a concentration of 10 g/L to prepare a hydrophilic polymer solution. A graphite felt as an electroconductive base material was immersed in the hydrophilic polymer solution, which was shaken for 30 seconds. Then, the graphite felt was taken out from the solution, and after the excess hydrophilic polymer solution was removed, the graphite felt was dried for 24 hours at 100°C to form a hydrophilic polymer layer. An increase in the weight of the graphite felt by this operation was measured, and the thickness of the hydrophilic polymer layer was calculated from the surface area of the felt measured with a specific surface area meter, and the specific gravity 1.2 of the solidified polymer. This thickness was estimated at an average of 25 nm.

### Example 6

In Example 6, an anode (6) to which anthraquinone-2,6-disulfonic acid (AQDS, E₀'=-185 mV) converted beforehand into sulfonyl chloride by the method described below had been immobilized was used as an anode.

AQDS was reacted in acetonitrile for 1 hour at 70°C, the acetonitrile containing sulfolane in an amount corresponding to 0.5 mol per mol of AQDS and phosphorus oxychloride in an amount corresponding to 4 mols per mol of AQDS, whereby the sulfonate groups were converted into sulfonyl chloride. The product was cooled, then filtered, washed with ice-cold water, and then dried to obtain a yellow powder of the AQDS chloride. A polyethyleneimine-coated felt (electroconductive base material) obtained by the above-mentioned method was immersed in tetrahydrofuran and, with gentle stirring, the AQDS chloride was added in an excess amount (100 mol% or more) with respect to the constituent hydrophilic monomer units of the hydrophilic polymer. The system was reacted for a period of the order of 12 hours at room temperature in the presence of triethylamine in an amount corresponding to 5 mols per mol of the AQDS chloride added to form a sulfonamide bond between the hydrophilic polymer and the AQDS chloride, thereby introducing the electron mediator. The resulting product was washed with methanol and dried to obtain a anode for biological power generation (6), which was used as the anode 1 of the biological power generation apparatus.

The average introduction rate of the AQDS units to the constituent hydrophilic monomer units of the hydrophilic polymer in the anode (6) was 25 mol%, which was 13 µmol per cm² of the projected area of the electrode. This value was determined by measuring the acid neutralization power of the polymer layer before introduction of AQDS and that after introduction of AQDS, comparing the values before and after introduction of AQDS, and calculating the amount of a decrease in the acid neutralization power.

Using the anode (6), an applied potential was shifted from -0.25 V to -0.15 V (hydrogen standard electrode potential) in an aqueous solution at pH 7, whereby electric current was generated. Thus, it can be said that the standard electrode potential E₀' of the anode (6) resides between -0.25 V and -0.15 V.

### Comparative Example 5

In Comparative Example 5, power generation performance was examined in the same manner as in Example 6, except that a control anode (5) having Indigo Carmine (E₀'=-125 mV) immobilized thereto was used.

Indigo Carmine used was converted into sulfonyl chloride beforehand by the method described below.

Indigo Carmine was reacted in acetonitrile for 1 hour at 70°C, the acetonitrile containing sulfolane in an amount corresponding to 0.5 mol per mol of Indigo Carmine and phosphorus oxychloride in an amount corresponding to 4 mols per mol of Indigo Carmine, whereby the sulfonate groups were converted into sulfonyl chloride. The product was cooled, then filtered, washed with ice-cold water, and then dried to obtain a blue powder of Indigo Carmine chloride. A polyethyleneimine-coated felt (electroconductive base material) obtained by the aforementioned method was immersed in tetrahydrofuran and, with gentle stirring, the Indigo Carmine chloride was added in an excess amount (100 mol% or more) with respect to the constituent hydrophilic monomer units of the hydrophilic polymer. The system was reacted for a period of the order of 12 hours at room temperature in the presence of triethylamine in an amount corresponding to 5 mols per mol of the Indigo Carmine chloride added to form a sulfonamide bond between the hydrophilic polymer and the Indigo Carmine chloride, thereby introducing the electron mediator. The resulting product was washed with methanol and dried to obtain a control anode (5), which was used as the anode 1 of the biological power generation apparatus.

The average introduction rate of the Indigo Carmine units to the constituent hydrophilic monomer units of the hydrophilic polymer in the control anode (5) was 18 mol%, which was 9 µmol per cm² of the projected area of the electrode. This value was determined by measuring the acid neutralization power of the polymer layer before introduction of Indigo Carmine and that after introduction of Indigo Carmine, comparing the values before and after introduction of Indigo Carmine, and calculating the amount of a decrease in the acid neutralization power.

Using the control anode (5), an applied potential was shifted from -0.13 V to -0.10 V (hydrogen standard electrode potential) in an aqueous solution at pH 7, whereby electric current was generated. Thus, it can be said that the standard electrode potential E₀' of the control anode (5) resides between -0.13 V and -0.10 V.

### Comparative Example 6

In Comparative Example 6, power generation performance was examined in the same manner as in Example 6, except that a control anode (6) having 5-hydroxy-1,4-naphthoquinone (5-H-1,4-NQ, E₀'=-3 mV) immobilized thereto was used.

5-H-1,4-NQ used was converted into sulfonyl chloride beforehand by the method described below.

5-H-1,4-NQ (5 g) produced by Aldrich was dissolved in 100 mL of a 20% (v/v) chlorosulfonic acid/dichloromethane solution, and reacted for 20 hours at room temperature in the presence of 2 mL concentrated sulfuric acid to introduce a sulfonic acid chloride group.

A polyethyleneimine-coated felt (electroconductive base material) obtained by the aforementioned method was immersed in tetrahydrofuran and, with gentle stirring, the above 5-H-1,4-NQ sulfonic acid chloride was added in an excess amount (100 mol% or more) with respect to the constituent hydrophilic monomer units of the hydrophilic polymer. The system was reacted for 12 hours at room temperature in the presence of triethylamine in an amount corresponding to 5 mols per mol of the 5-H-1,4-NQ sulfonic acid chloride added to form a sulfonamide bond between the hydrophilic polymer and the 5-H-1,4-NQ, thereby introducing the electron mediator. The resulting product was washed with methanol and dried to obtain a control anode (6), which was used as the anode 1 of the biological power generation apparatus.

The average introduction rate of the 5-H-1,4-NQ units to the constituent hydrophilic monomer units of the hydrophilic polymer in the control anode (6) was 23 mol%, which was 12 µmol per cm² of the projected area of the electrode. This value was determined by measuring the acid neutralization power of the polymer layer before introduction of 5-H-1,4-NQ and that after introduction of 5-H-1,4-NQ, comparing the values before and after introduction of 5-H-1,4-NQ, and calculating the amount of a decrease in the acid neutralization power.

Using the control anode (6), an applied potential was shifted from -0.10 V to +0.05 V (hydrogen standard electrode potential) in an aqueous solution at pH 7, whereby electric current was generated. Thus, it can be said that the standard electrode potential E₀' of the control anode (5) resides between -0.10 V and +0.05 V.

### [Example 7, Comparative Example 7]

CARBOLON (registered trademark) Felt GF-20 produced by Nippon Carbon Co., Ltd. was used as a carbon felt, which is an electroconductive base material. Polyacrylic acid (molecular weight: about 1,000,000) produced by Wako Pure Chemical Industries, Ltd. was used as a hydrophilic polymer. Polyacrylic acid was dissolved in methanol to a concentration of 5 g/L to prepare a hydrophilic polymer solution. The graphite felt was immersed in the hydrophilic polymer solution, which was shaken for 30 seconds. Then, the graphite felt was withdrawn and, after the excess polymer solution was removed, the graphite felt was dried for 24 hours at 100°C to form a hydrophilic polymer layer. An increase in the weight of the graphite felt by this operation was measured, and the thickness of the hydrophilic polymer layer was calculated from the surface area of the felt measured with a specific surface area meter, and the specific gravity 0.8 of the solidified hydrophilic polymer. This thickness was estimated at an average of 28 nm.

### Example 7

In Example 7, an anode (7) having 2-methyl-5-amino-1,4-naphthoquinone (2-M-5-A-1,4-NQ) immobilized thereto by the method described below was used as an anode.

A polyacrylic acid-coated felt obtained by the aforementioned method was immersed in dimethylformamide and, with gentle stirring, the 2-M-5-A-1,4-NQ was added in an excess amount (100 mol% or more) with respect to the constituent hydrophilic monomer units of the hydrophilic polymer. The system was reacted for a period of the order of 72 hours at room temperature in the presence of dicyclohexylcarbodiimide to form an amide bond between the amino group of the 2-M-5-A-1,4-NQ and the carboxyl group of the polymer, thereby introducing the electron mediator into the hydrophilic polymer layer. The resulting product was washed with dimethylformamide and then methanol, and then dried to obtain an anode for biological power generation (7), which was used as the anode 1 of the biological power generation apparatus.

The average introduction rate of the 2-M-5-A-1,4-NQ units to the polymer units of polyacrylic acid in the anode (7) was 25 mol%, which was 14 µmol per cm² of the projected area of the electrode. This value was determined by measuring the acid neutralization power of the polymer layer before introduction of 2-M-5-A-1,4-NQ and that after introduction of 2-M-5-A-1,4-NQ, comparing the values before and after introduction of 2-M-5-A-1,4-NQ, and calculating the amount of a decrease in the acid neutralization power.

Using the anode (7), an applied potential was shifted from -0.15 V to -0.13 V (hydrogen standard electrode potential) in an aqueous solution at pH 7, whereby electric current was generated. Thus, it can be said that the standard electrode potential E₀' of the anode (7) resides between -0.15 V and -0.13 V.

### Comparative Example 7

In Comparative Example 7, power generation performance was examined in the same manner as in Example 7, except that a control anode (7) having Neutral Red (E₀'=-325 mV) immobilized thereto was used as an anode.

A polyacrylic acid-coated felt obtained by the method described in Example 7 was immersed in dimethylformamide and, with gentle stirring, Neutral Red was added in an excess amount (100 mol% or more) with respect to the constituent hydrophilic monomer units of the polyacrylic acid. The system was reacted for 72 hours at room temperature in the presence of dicyclohexylcarbodiimide to form an amide bond between the amino group of Neutral Red and the carboxyl group of the polymer, thereby introducing the electron mediator into the hydrophilic polymer layer. The resulting product was washed with dimethylformamide and then methanol, and then dried to obtain a control anode (7), which was used as the anode 1 of the biological power generation apparatus.

The average introduction rate of the Neutral Red units to the polymer units of polyacrylic acid in the control anode (7) was 28 mol%, which was 16 µmol per cm² of the projected area of the electrode. This value was determined by measuring the acid neutralization power of the polymer layer before introduction of Neutral Red and that after introduction of Neutral Red, comparing the values before and after introduction of Neutral Red, and calculating the amount of a decrease in the acid neutralization power.

Using the control anode (7), an applied potential was shifted from -0.45 V to -0.28 V (hydrogen standard electrode potential) in an aqueous solution at pH 7, whereby electric current was generated. Thus, it can be said that the standard electrode potential E₀' of the control anode (7) resides between -0.45 V and -0.28 V.

### <Power generation performance>

A power generation test was conducted by means of the biological power generation apparatus shown in Fig. 4 with the use of each of the anodes obtained in Examples 6 and 7 and Comparative Examples 5 to 7. The results of the test are shown in Table 8.

**[Table 8]**

| Experimental system | Specifications for anode | Anode potential E₀' (V) | Average current produced (mA) | Average voltage (mV) | Average output (mW) |
|---|---|---|---|---|---|
| Ex. 6 | Thickness of polyethylene-imine layer 25 nm, AQDS introduction rate 25 mol% | -0.25 to -0.15 | 105 | 360 | 38 |
| Ex. 7 | Thickness of polyacrylic acid layer 28 nm, 2-M-5-A-1,4-NQ introduction rate 25 mol% | -0.15 to -0.13 | 51 | 295 | 15 |
| Comp. Ex. 5 | Thickness of polyethylene-imine layer 25 nm, Indigo Carmine introduction rate 18 mol% | -0.13 to -0.10 | 1.1 | 260 | 0.3 |
| Comp. Ex. 6 | Thickness of polyethylene-imine layer 25 nm, 5-H-1,4-NQ introduction rate 23 mol% | -0.10 to +0.05 | 13 | 250 | 3.2 |
| Comp. Ex. 7 | Thickness of polyacrylic acid layer 28 nm, Neutral Red introduction rate 25 mol% | -0.45 to -0.28 | 2.1 | 380 | 0.8 |

In view of the electrical output generated, it is seen that when the standard electrode potential (E₀') of the anode was within the range of -0.13 to -0.28 V (Examples 6 and 7), the claimed range of the present invention, electric power produced was higher than when the standard electrode potential (E₀') of the anode was outside the claimed range of the present invention (Comparative Examples 5 to 7), and the electric power was about 5 to 120 times as high.

Comparison between Examples 6 and 7 showed that the output in Example 6 was about 2.5 times as high as that in Example 7. This is assumed to have been because the anode (6) of Example 6 had a standard electrode potential of -0.25 to -0.15 V, whereas the anode (7) of Example 7 had a slightly higher value of -0.15 to -0.13 V. These findings show that the standard electrode potential of the anode at pH 7, which is set to be within the range of -0.13 V to -0.28 V, preferably, -0.15 V to -0.27 V, is advantageous for power generation.

### INDUSTRIAL APPLICABILITY

As described above, the present invention makes it possible to prepare an anode for biological power generation efficiently by a simple apparatus and a simple method, and perform efficient oxidative decomposition of a wet-type organic substance, such as waste water, waste liquor, night soil, food waste, other organic waste, or sludge, or a decomposition product thereof, by biological power generation using this anode, thereby obtaining electric energy. The present invention is expected to be widely used as a power generation method which utilizes the oxidative decomposition of a wet-type organic substance and reduction potential.

## Claims

1. An anode for biological power generation which comprises a conductive base material having a surface at least partly coated with a hydrophilic polymer layer, to which an electron mediator is connected by chemical bond, and the anode for biological power generation has a standard electrode potential (E₀') at pH 7 in a range of -0.13 V to -0.28 V.

2. The anode for biological power generation according to claim 1, wherein the hydrophilic polymer layer has an average thickness of 200 nm or less.

3. The anode for biological power generation according to claim 1 or 2, wherein the electron mediator is introduced to the hydrophilic polymer layer in the proportion of 1 to 30 mol% of constituent hydrophilic monomer units of a hydrophilic polymer constituting the hydrophilic polymer layer.

4. The anode for biological power generation according to any one of claims 1 to 3, wherein the electron mediator introduced to the hydrophilic polymer layer has a hydrophilic functional group.

5. The anode for biological power generation according to any one of claims 1 to 4, wherein a hydrophilic polymer constituting the hydrophilic polymer layer is a polymer having any one functional group selected from the group consisting of an amino group, an imino group, a carboxyl group and a sulfonate group.

6. The anode for biological power generation according to any one of claims 1 to 5, wherein the hydrophilic polymer is polyethyleneimine, polyvinylamine, polyallylamine, polyacrylic acid or polymethacrylic acid.

7. The anode for biological power generation according to any one of claims 1 to 6, wherein the electron mediator is one or more oxidation-reduction substances selected from the group consisting of anthraquinone derivatives, naphthoquinone derivatives, benzoquinone derivatives and isoalloxazine derivatives.

8. The anode for biological power generation according to claim 7, wherein the electron mediator is one or more oxidation-reduction substances selected from the group consisting of anthraquinonecarboxylic acids (AQC), aminoanthraquinones (AAQ), diaminoanthraquinones (DAAQ), anthraquinonesulfonic acids (AQS), diaminoanthraquinonesulfonic acids (DAAQS), anthraquinonedisulfonic acids (AQDS), diaminoanthraquinonedisulfonic acids (DAAQDS), ethylanthraquinones (EAQ), methylnaphthoquinones (MNQ), methylaminonaphthoquinones (MANQ), bromomethylaminonaphthoquinones (BrMANQ), dimethylnaphthoquinones (DMNQ), dimethylaminonaphthoquinones (DMANQ), lapachol (LpQ), hydroxy(methylbutenyl)aminonaphthoquinones (ALpQ), naphthoquinonesulfonic acids (NQS), trimethylaminobenzoquinones (TMABQ), flavin mononucleotide (FMN) and derivatives thereof.

9. The anode for biological power generation according to any one of claims 1 to 8, wherein the conductive base material comprises at least a conductive carbon material.

10. The anode for biological power generation according to claim 9, wherein the conductive base material comprises at least one member of a group consisting of graphite, carbon black, fullerene, carbon nanotube (CNT), vapor-grown carbon fiber (VGCF), a carbon felt, a carbon cloth and a carbon paper.

11. The anode for biological power generation according to claim 9 or 10, wherein the conductive base material and the hydrophilic polymer layer are connected by a covalent bond or a hydrogen bond.

12. The anode for biological power generation according to any one of claims 1 to 8, wherein the conductive base material is selected from aluminum, nickel, iron, copper, gold, platinum, stainless steel, iron-silicon alloy, calcium-silicon alloy, aluminum-zinc-silicon alloy, molybdenum-vanadium alloy and nickel-copper alloy.

13. The anode for biological power generation according to any one of claims 1 to 12, wherein a hydrophilic polymer constituting the hydrophilic polymer layer is crosslinked to the proportion of 0.01 to 10 mol% of constituent hydrophilic monomer units.

14. A method for producing an anode for biological power generation according to any one of claims 1 to 13, comprising:
a hydrophilic polymer-coated conductive base material formation step forming a hydrophilic polymer-coated conductive base material having a surface at least partly coated with a hydrophilic polymer; and
an electron mediator introduction step introducing an electron mediator into the hydrophilic polymer-coated conductive base material.

15. The method for producing an anode for biological power generation according to claim 14, wherein the hydrophilic polymer-coated conductive base material formation step is an adhesion/fixation step of dripping a polymer solution onto the conductive base material, or coating the conductive base material with the polymer solution, or spraying the polymer solution onto the conductive base material, or dipping the conductive base material in the polymer solution, the polymer solution having a hydrophilic polymer concentration of 50 g/L or less, thereby adhering or fixing the hydrophilic polymer to the conductive base material.

16. The method for producing an anode for biological power generation according to claim 14, wherein the hydrophilic polymer-coated conductive base material formation step is an immobilization step of chemically binding a functional group of the conductive base material and a functional group of the hydrophilic polymer, thereby immobilizing the hydrophilic polymer to the conductive base material.

17. The method for producing an anode for biological power generation according to any one of claims 14 to 16, wherein the electron mediator introduction step is such that the electron mediator reacts with 30 mol% or less of constituent hydrophilic monomer units of the hydrophilic polymer constituting the hydrophilic polymer layer of the hydrophilic polymer-coated conductive base material, thereby introducing the electron mediator.

18. The method for producing an anode for biological power generation according to any one of claims 14 to 17, wherein after the electron mediator introduction step, a hydrophilic functional group introduction step of introducing a hydrophilic functional group into the electron mediator is further included.

19. The method for producing an anode for biological power generation according to any one of claims 14 to 18, wherein before the hydrophilic polymer-coated conductive base material formation step, a pretreatment step of introducing a carboxyl group into the conductive base material is further included.

20. A biological power generator, comprising:
an anaerobic region including microorganisms capable of growing under anaerobic conditions, a solution or suspension containing an organic substance, and the anode for biological power generation according to any one of claims 1 to 13;
an aerobic region including molecular oxygen and a cathode; and
a diaphragm defining the anaerobic region and the aerobic region,
wherein the anode and the cathode are electrically connected to an instrument utilizing electric power to form a closed circuit, and electric power is generated by utilizing an oxidation reaction using the organic substance as an electron donor within the anaerobic region, and a reduction reaction using oxygen as an electron acceptor within the aerobic region.

21. A power generation method, comprising:
providing an anaerobic region including microorganisms capable of growing under anaerobic conditions, a solution or suspension containing an organic substance, and the anode for biological power generation according to any one of claims 1 to 13, an aerobic region including molecular oxygen and a cathode, and a diaphragm defining the anaerobic region and the aerobic region;
electrically connecting the anode and the cathode to an instrument utilizing electric power to form a closed circuit; and
utilizing an oxidation reaction using the organic substance as an electron donor within the anaerobic region, and a reduction reaction using oxygen as an electron acceptor within the aerobic region to generate electric power.
